(19) Europäisches Patentamt
European Patent Office
Office européen des brevets

(11) **EP 4 187 633 A1**

(12) **EUROPEAN PATENT APPLICATION**

(43) Date of publication:
**31.05.2023 Bulletin 2023/22**

(21) Application number: **22209664.6**

(22) Date of filing: **25.11.2022**

(51) International Patent Classification (IPC):
*H01M 4/04* (2006.01)    *H01M 4/1393* (2010.01)
*H01M 4/1395* (2010.01)    *H01M 4/36* (2006.01)
*H01M 4/38* (2006.01)    *H01M 4/48* (2010.01)
*H01M 4/587* (2010.01)    *H01M 4/62* (2006.01)

(52) Cooperative Patent Classification (CPC):
**H01M 4/0471; H01M 4/1393; H01M 4/1395;
H01M 4/366; H01M 4/386; H01M 4/483;
H01M 4/587; H01M 4/621; H01M 4/623;
H01M 4/625**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.11.2021 KR 20210166115**

(71) Applicant: **Samsung SDI Co., Ltd.
Yongin-si, Gyeonggi-do 17084 (KR)**

(72) Inventors:
• **SHIM, Kyueun**
**17084 Yongin-si (KR)**

• **MAH, Sangkook**
**17084 Yongin-si (KR)**
• **SON, Inhyuk**
**17084 Yongin-si (KR)**
• **JO, Sungnim**
**17084 Yongin-si (KR)**
• **KIM, Guesung**
**17084 Yongin-si (KR)**
• **PARK, Jinhwan**
**17084 Yongin-si (KR)**
• **KAPYLOU, Andrei**
**17084 Yongin-si (KR)**
• **LEE, Jaewoan**
**17084 Yongin-si (KR)**

(74) Representative: **Marks & Clerk LLP
15 Fetter Lane
London EC4A 1BW (GB)**

(54) **COMPOSITE ANODE ACTIVE MATERIAL, ANODE AND LITHIUM BATTERY INCLUDING THE SAME**

(57) Provided are a composite anode active material, and an anode and a lithium battery, each including the same. The composite anode active material includes a core and a shell located on and conformed to the surface of the core, wherein the core includes a silicon-containing structure, a silicon-containing compound, or a combination thereof, and the shell includes at least one first metal oxide represented by $M_aO_b$ ($0<a\leq3$, $0<b<4$, and when a is 1, 2, or 3, b is not an integer), and a first carbonaceous material, the first metal oxide is located inside a matrix of first carbonaceous material, and M includes at least one metal selected from Group 2 to Group 13, Group 15, and Group 16 of the Periodic Table of Elements.

FIG. 1

EP 4 187 633 A1

**Description**

BACKGROUND

1. Field

One or more embodiments relate to a composite anode active material, and an anode and a lithium battery, each including the same.

2. Description of the Related Art

In order to meet the miniaturization and high performance of various devices, lithium batteries need to have high energy density in addition to miniaturization and weight reduction. That is, high-capacity lithium batteries are becoming more important.

In order to implement lithium batteries suitable for these uses, anode active materials having a high capacity are being studied.

Compared to carbonaceous anode active materials, silicon-based anode active materials of the prior art easily deteriorate due to the volume change caused by charging and discharging.

There is a need to develop lithium batteries that include a silicon-based anode active material and provide excellent cycle characteristics.

SUMMARY

One or more embodiments include a novel composite anode active material that prevents deterioration of lithium batteries.

One or more embodiments provide an anode including the composite anode active material.

One or more embodiments provide a lithium battery including the anode.

Additional aspects will be set forth in part in the description which follows and, in part, will be apparent from the description, or may be learned by practice of the presented embodiments of the disclosure.

According to one or more embodiments, a composite anode active material includes:

a core; and
a shell disposed on and conformed to a surface of the core, wherein
the core includes a silicon-containing structure, a silicon-containing compound, or a combination thereof,
the shell includes at least one first metal oxide represented by Formula $M_aO_b$ (0<a≤3, 0<b<4, and when a is 1, 2, or 3, b is not an integer), and a first carbonaceous material, and
the first metal oxide is placed in the first carbonaceous material, and M is at least one metal selected from Group 2 to Group 13, Group 15, and Group 16 of the Periodic

Table of Elements.

According to one or more embodiments,
an anode includes the composite anode active material.

According to one or more embodiments, an anode includes

a dry composite anode active material, a dry conductive material, and a dry binder,
the dry composite anode active material includes
a core, and
a shell located on and conformed to a surface of the core,
the core includes a silicon-containing structure, a silicon-containing compound, or a combination thereof,
the shell includes at least one first metal oxide represented by Formula $M_aO_b$ (0<a≤3, 0<b<4, and when a is 1, 2, or 3, b is not an integer), and a first carbonaceous material, and
the first metal oxide is placed in the first carbonaceous material, and M is at least one metal selected from Group 2 to Group 13, Group 15, and Group 16 of the Periodic

Table of Elements.

According to one or more embodiments, a lithium battery includes the anode.

At least some of the above and other features of the invention are set out in the claims.

BRIEF DESCRIPTION OF THE DRAWINGS

The above and other aspects, features, and advantages of certain embodiments of the disclosure will be more apparent from the following description taken in conjunction with the accompanying drawings, in which:

FIG. 1 is a cross-sectional schematic view of a composite anode active material according to an embodiment;

FIG. 2A is an X-ray photoelectron spectroscopy (XPS) spectrum of the C1s orbital of the silicon composite structure prepared according to Preparation Example 3 and the composite anode active material prepared according to Example 1;

FIG. 2B is an XPS spectrum of the O1s orbital of the silicon composite structure prepared according to Preparation Example 3 and the composite anode active material prepared according to Example 1;

FIG. 2C is an XPS spectrum of the Si2p orbital of the silicon composite structure prepared according to Preparation Example 3 and the composite anode active material prepared according to Example 1;

FIG. 2D is an XPS spectrum of the Al2p orbital of the silicon composite structure prepared according to Preparation Example 3 and the composite anode active material prepared according to Example 1;

FIG. 3A is an XPS spectrum of the C1s orbital of the silicon composite structure prepared according to Comparative Example 5 and the composite anode active material prepared according to Example 8;

FIG. 3B is an XPS spectrum of the O1s orbital of the silicon composite structure prepared according to Comparative Example 5 and the composite anode active material prepared according to Example 8;

FIG. 3C is an XPS spectrum of the Si2p orbital of the silicon composite structure prepared according to Comparative Example 5 and the composite anode active material prepared according to Example 8;

FIG. 3D is an XPS spectrum of the Al2p orbital of the silicon composite structure prepared according to Comparative Example 5 and the composite anode active material prepared according to Example 8;

FIG. 4A is a scanning electron microscope (SEM) image of the composite anode active material of Example 1;

FIG. 4B is an SEM-energy dispersive X-ray spectroscopy (EDS) mapping image of the composite anode active material of Example 1;

FIG. 4C is a SEM image of the composite anode active material of Example 8;

FIG. 4D is an SEM-energy dispersive spectroscope (EDS) mapping image of the composite anode active material of Example 8;

FIG. 5 is a cross-sectional schematic view of a composite anode active material according to an embodiment;

FIG. 6 is a schematic view of a lithium battery according to an embodiment;

FIG. 7 is a schematic view of a lithium battery according to an embodiment; and

FIG. 8 is a schematic view of a lithium battery according to an embodiment.

DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present invention. As used herein, the term "and/or" includes any and all combinations of one or more of the associated listed items. Expressions such as "at least one of," when preceding a list of elements, modify the entire list of elements and do not modify the individual elements of the list.

Since the present inventive concept to be described below may be variously modified and may have various embodiments, specific embodiments are illustrated in the drawings and described in detail in the detailed description. However, this is not intended to limit the present inventive concept to a specific embodiment, and it should be understood to include all modifications, equivalents, or substitutes included in the technical scope of the present inventive concept.

The terms used below are only used to describe specific embodiments and are not intended to limit the present inventive concept. Singular expressions include plural expressions unless the context clearly indicates otherwise. Hereinafter, it will be further understood that the terms "comprise", "include" or "have," when used in this specification, specify the presence of stated features, integers, steps, operations, elements, and/or components, but do not preclude the presence or addition of one or more other features, integers, steps, operations, elements, components, and/or groups thereof. The "/" used below may be interpreted as "and" or as "or" depending on the situation.

In the drawings, thickness is enlarged or reduced in order to clearly express various layers and regions. Throughout the specification, like reference numerals designate like components. Throughout the specification, when a component such as a layer, a film, a region, or a plate is mentioned to be placed "on" another component, it will be understood that it may be directly on another component or that another component may be interposed therebetween. Throughout the specification, although the terms "first", "second", "third", etc., may be used herein to describe various elements, components, regions, and/or layers, these elements, components, regions, and/or layers should not be limited by these terms. These terms are only used to distinguish one component from another component.

The term "particle diameter" used herein refers to an average diameter when the particle is spherical, or an average major axis length when the particle is non-spherical. The particle diameter of the particles may be measured using a particle size analyzer (PSA). The "particle diameter" of the particles may be, for example, an average particle diameter. The average particle diameter is the median particle diameter (D50) unless explicitly stated otherwise. The median particle diameter (D50) refers to a particle diameter corresponding to a cumulative value of 50% calculated from the side of the particle having the smallest particle diameter on the cumulative distribution curve of particle sizes where particles are accumulated in the order of particle diameter from the smallest particle to the largest particle. The cumulative value may be, for example, a cumulative volume. The median particle diameter (D50) may be measured by, for example, laser diffraction.

The term "particle diameter D10" used herein refers to a particle diameter corresponding to a cumulative value of 10% calculated from the side of the particle having the smallest particle diameter on the cumulative distribution curve of particle sizes.

The term "particle diameter D90" used herein refers to a particle diameter corresponding to a cumulative value of 90% calculated from the side of the particle having the smallest particle diameter on the cumulative distribution curve of particle sizes.

The term "silicon suboxide" used herein may have, for example, a single composition represented by $SiO_x$ (0<x<2). Alternatively, "silicon suboxide" may include, for example, at least one selected from Si and $SiO_2$ to have an average composition of $SiO_x$ (0<x<2). Alternatively, "silicon suboxide" may also include, for example, a silicon-suboxide-like material. The silicon suboxide-like material is a material that has properties similar to those of silicon suboxide, and may include, for example, at least one selected from Si, $SiO_2$ to have an average composition of $SiO_x$ (0<x<2).

Hereinafter, a composite anode active material according to embodiments, an anode including the composite anode active material, and a lithium battery including the anode will be described in more detail.

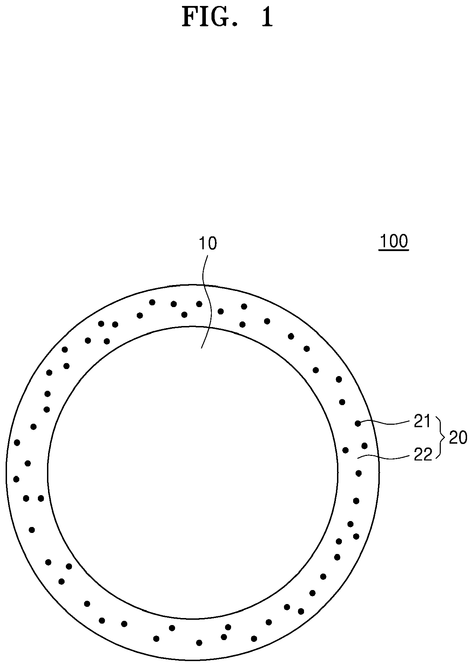

The composite anode active material includes: a core; and a shell located on and conformed to a surface of the core, wherein the core includes a silicon-containing structure, a silicon-containing compound, or a combination thereof, the shell includes at least one first metal oxide represented by Formula $M_aO_b$ (0<a≤3, 0<b<4, and when a is 1, 2, or 3, b is not an integer), and a first carbonaceous material, and the first metal oxide is placed in a first carbonaceous material (e.g. is located in a matrix of the first carbonaceous material), and M is at least one metal selected from Group 2 to Group 13, Group 15, and Group 16 of the Periodic Table of Elements. Referring to FIG. 1, a composite anode active material 100 includes a core 10 and a shell 20 continuously or discontinuously located along the surface of the core 10. The shell 20 may cover all or part of the core 10. The core 10 includes a silicon-containing anode active material such as a silicon-containing structure, a silicon-containing compound, or a combination thereof, and the shell 20 includes a first metal oxide 21 and a first carbonaceous material 22.

Hereinafter, a theoretical basis for providing an excellent effect of the composite anode active material according to an embodiment will be described, but this is to aid understanding of the present inventive concept and is not intended to limit the present inventive concept in any way.

The composite anode active material includes a matrix of the first carbonaceous material, and by using a composite including a plurality of first metal oxides located inside the matrix, a uniform shell may be located on the core while preventing agglomeration of the first carbonaceous material. Accordingly, a contact between a core and an electrolyte is effectively blocked, thereby effectively preventing the side reactions due to the contact between the core and the electrolyte. The first carbonaceous material may be, for example, a crystalline carbonaceous material. The first carbonaceous material may be, for example, a carbonaceous nanostructure. The first carbonaceous material may be, for example, a carbonaceous two-dimensional nanostructure. The first carbonaceous material may be, for example, carbonaceous flakes. The first carbonaceous material may be, for example, graphene. For example, a shell including graphene and/or a matrix thereof has flexibility, meaning that the volume change in the core during charging and discharging may be easily tolerated. Therefore, since the occurrence of cracks on the surface and/or inside of the composite anode active material during charging and discharging may be suppressed, the formation of a solid electrolyte film (SEI) on the surface and/or inside of the composite anode active material may be suppressed. As a result, deterioration of the lithium battery containing the composite anode active material is suppressed. In contrast, in the case of silicon-based anode active materials of the related art, in general, cracks occur on the surface and/or inside of the silicon-containing anode active material due to volume change during charging and discharging. A new surface is generated inside and/or outside the silicon-based anode active material by the cracks. On this new surface, a solid electrolyte film (SEI) is formed by a side reaction between the silicon-based anode active material and the electrolyte. The continuous formation of the solid electrolyte film (SEI) as the charging and discharging proceeds increases the internal resistance of the silicon-based anode active material, and consequently degrades the performance of the lithium battery. In addition, carbonaceous materials of the related art are easily agglomerated during the coating process, so that it is difficult to uniformly coat the core.

The core of the composite anode active material contains a silicon-containing anode active material, such as a silicon-containing structure, a silicon-containing compound, or a combination thereof. The silicon-containing structure may include or may be, for example, a silicon composite structure. The silicon composite structure may be, for example, a silicon-carbon composite. The silicon-carbon composite may be, for example, a silicon-carbon nanocomposite. The silicon-carbon nanocomposite refers to a composite in which at least one of silicon and carbon has a nanoscale size of less than 1 $\mu$m. For example, the silicon-carbon nanocomposite may be a composite in which silicon nanoparticles and carbon nanoparticles are complexed. The silicon-containing compound may include, for example, silicon, silicon alloy, silicon oxide, silicon nitride, silicon nitroxide, silicon carbide, or combinations thereof. The silicon-containing compound may be, for example, $SiO_x$ (0<x<2).

The silicon composite structure may include, for example, porous silicon secondary particles and a first carbon flake located on the porous silicon secondary particles, wherein the porous silicon secondary particles are aggregates of a plurality of silicon composite primary particles, and the silicon composite primary particles include: silicon; silicon suboxide ($SiO_x$, 0<x<2) located on the silicon; and a second carbon flake located on the silicon suboxide.

The silicon composite structure may include a porous silicon secondary particle containing an agglomerate of a plurality of silicon composite primary particles and a first carbon flake located on the porous silicon secondary particle. In addition, the first carbon flake located on the porous silicon secondary particles may be located to cover at least one surface of the porous silicon secondary particles. The first carbon flake can be deposited directly on the porous silicon secondary particles. The first carbon flake may be grown directly on the silicon suboxide of the porous silicon secondary particles. The first carbon flake may be grown directly on the surface of the porous silicon secondary particles to be located directly on the surface of the porous silicon secondary particles. The first carbon flake may completely cover the surface of the porous silicon secondary particles or may cover a portion thereof. The coverage of the first carbon flake may be, for example, 5% to 100%, 10% to 99%, 20% to 95%, or 40% to 90%, based on the total surface area of the porous silicon secondary particles. The carbon of the first carbon flake exists on the surface of the porous silicon secondary particles and effectively buffers the volume change of the porous silicon secondary particles. The size of the porous silicon secondary particles may be, for example, about 1 $\mu$m to about 20 $\mu$m, about 2 $\mu$m to about 18 $\mu$m, or about 3 $\mu$m to about 10 $\mu$m. The size of the first carbon flake may be, for example, about 1 nm to about 200 nm, about 5 nm to about 150 nm, or about 10 nm to about 100 nm. The term "size" used herein refers to the diameter or the major axis length.

A silicon composite primary particle includes silicon, silicon suboxide ($SiO_x$, 0<x<2) located on at least one surface of the silicon, and a second carbon flake located on one side of the silicon suboxide. The silicon may be, for example, plate-shaped, needle-shaped, spherical, or a combination thereof. The shape of silicon is not particularly limited, and may be, for example, the shape of a sphere, nanowire, needle, rod, particle, nanotube, nanorod, wafer, and nanoribbon, or a combination thereof. The average size of silicon may be, for example, about 10 nm to about 1 $\mu$m, about 10 nm to about 500 nm, about 20 nm to about 150 nm, or 100 nm. Regarding the average size of silicon, when the silicon is spherical particles, the average size is an average particle diameter, and when the silicon is non-spherical particles, for example, plate-shaped particles or needle-shaped particles, the average size is a major axis length, length, or thickness. Silicon suboxide ($SiO_x$) on silicon in the silicon composite primary particles (0<x<2) may cover at least a surface of silicon. Silicon suboxide may be located directly on silicon. The silicon suboxide may completely cover the surface of silicon or may cover a portion thereof. The coverage of the silicon suboxide may be, for example, from about 1% to about 100%, from about 5% to about 99%, from about 10% to about 95%, or from about 20% to about 90%, based on the total surface area of silicon. A second carbon flake located on the silicon suboxide may be located to cover at least one surface of the silicon suboxide. The second carbon flake may be located directly on the silicon suboxide. The second carbon flake may be grown directly from the surface of the silicon suboxide and located directly on the surface of the silicon suboxide. In an embodiment, the second carbon flake may completely cover the surface of silicon suboxide or may cover a portion thereof. The coverage of the second carbon flake may be, for example, about 10% to about 100%, about 10% to about 99%, about 20% to about 95%, or about 40% to about 90%, based on the total surface area of the silicon suboxide. The carbon of the second carbon flake exists on the surface of silicon and/or silicon suboxide and may effectively buffer the volume change of silicon composite primary particles. The size of the second carbon flake may be, for example, about 1 nm to about 200 nm, about 5 nm to about 150 nm, or about 10 nm to about 100 nm. The term "size" used herein refers to the diameter or the major axis length.

The silicon composite structure may include porous silicon secondary particles and a first carbon flake located on the porous silicon secondary particles. The first carbon flake may completely cover the porous silicon secondary particles or may cover a portion thereof. For example, the first carbon flake may completely surround the porous silicon secondary particles or may surround a portion thereof. The silicon composite structure may include a second carbon flake located on the silicon composite primary particles included in the porous silicon secondary particles. During volume expansion/contraction of the silicon composite structure, silicon included in the porous silicon secondary particles may maintain contact with the first carbon flake and/or the second carbon flake. Since the porous silicon secondary particles include pores, the pores may act as an internal buffer space during volume expansion/contraction of the silicon composite structure. Therefore, unlike silicon-based anode active materials of the prior art, the silicon composite structure may suppress the increase in internal resistance while effectively accommodating the volume change of the silicon composite structure during charging and discharging.

The porosity of the silicon composite structure may be, for example, 60% or less, 30% to 60%. Alternatively, the silicon composite structure may be non-porous. The non-porous structure may have, for example, a porosity of 10% or less or 5% or less. The non-porous structure may have, for example, a porosity of 0.01% to 5%, or 0%. Porosity may be measured by a mercury adsorption method (porosimetry) or a nitrogen adsorption method.

The silicon composite structure may have, for example, a non-spherical shape. The circularity of the silicon composite structure may be, for example, 0.9 or less. The circularity of the silicon composite structure may be, for example, 0.7 to 0.9, 0.8 to 0.9, or 0.85 to 0.9. Circularity is determined by, for example, $4\pi A/P^2$ (A is an area, P is a perimeter).

The silicon composite structure may include a first carbon flake and a second carbon flake. The first carbon flake and the second carbon flake may be, for example, same carbon flakes. The first carbon flake and the second carbon flake may be any carbonaceous material that has a flake shape. The first carbon flake and the second carbon flake may be each independently graphene, graphite, carbon fiber, graphitic carbon, graphene oxide, or a mixture thereof. The porous composite structure may include, for example, first graphene and second graphene as the first carbon flake and the second carbon flake, respectively. The first graphene and the second graphene may each have a structure such as a nanosheet, a film (or film), or a flake. Nanosheet refers to a form formed in an irregular state with a thickness of about 1000 nm or less, for example, 1 nm to 1000 nm on silicon suboxide or porous silicon secondary particles. The film refers to a form continuously and uniformly formed on silicon suboxide or porous silicon secondary particles.

The silicon-containing structure may further include a carbonaceous coating layer located on the silicon composite structure. The carbonaceous coating layer may improve the physical stability of the silicon composite structure and more effectively prevent side reactions between the silicon and the electrolyte during charging and discharging. The carbonaceous coating layer may include, for example, first amorphous carbon. The carbonaceous coating layer may include first amorphous carbon having a high density. The first amorphous carbon may include, for example, pitch carbon, soft carbon, hard carbon, mesophase pitch carbide, calcined coke, carbon fiber, or a mixture thereof. The carbonaceous coating layer may further include crystalline carbon. By further including crystalline carbon, the carbonaceous coating layer may more effectively act as a buffer for the volume change of the silicon composite structure. The crystalline carbon may be, for example, natural graphite, artificial graphite, graphene, fullerene, carbon nanotubes, or a mixture thereof. The thickness of the carbonaceous coating layer may be, for example, about 1 nm to about 5000 nm, about 10 nm to about 2000 nm, or about 5 nm to about 2500 nm.

The silicon-containing structure may further include, for example, a second amorphous carbon located within the silicon composite structure. For example, the silicon composite structure may include porous silicon secondary particles, and the second amorphous carbon may be located in the pores of the porous silicon secondary particles. The second amorphous carbon may be located between the plurality of silicon composite primary particles constituting the porous silicon secondary particles. The silicon composite primary particle may include, for example, silicon, silicon suboxide (SiO$_x$, 0<x<2) located on silicon, and a second carbon flake located on the silicon suboxide; and second amorphous carbon located on the second carbon flake. The silicon composite structure may have a dense structure having a non-porous structure due to the filling of the pores with dense second amorphous carbon therein. Since the silicon composite structure has such a non-porous structure, a side reaction with an electrolyte during charging and discharging may be further reduced, and the volume change of silicon may be more effectively reduced. The second amorphous carbon may include, for example, pitch carbon, soft carbon, hard carbon, mesophase pitch carbide, calcined coke, carbon fiber, or a mixture thereof.

A mixing ratio of the total weight of the first carbon, which is the sum of the carbon of the first carbon flake and the carbon of the second carbon flake to the weight of the second carbon, which is the carbon of the carbonaceous coating layer, in the silicon composite structure may be, for example, 30:1 to 1:3, 20:1 to 1:1, or 10:1 to 1:0.9. When the first carbon and the second carbon have these ranges of mixing ratio, a lithium battery having improved cyclic characteristics may be provided. The mixing ratio of the first carbon and the second carbon may be confirmed through thermogravimetric analysis. The first carbon is associated with a peak appearing in a region of 700 °C to 750 °C, and the second carbon is associated with a peak appearing in a region of 600 °C to 650 °C. Thermogravimetric analysis may be performed in conditions including, for example, the temperature increase rate of about 10 °C/min, an air atmosphere of 25 °C to 1,000 °C. The first carbon may be, for example, crystalline carbon and the second carbon may be, for example, amorphous carbon. A mixing ratio of the total weight of the carbon of the first carbon flake and the carbon of the second carbon flake to the total weight of the first amorphous carbon and the second amorphous carbon may be, for example, 1:99 to 99:1, 1:20 to 80:1, or 1:1 to 1:10.

The core is a silicon-containing anode active material, and may include a silicon-containing compound SiO$_x$

(0<x<2). The average particle diameter of $SiO_x$ (0<x<2) may be, for example, 1 $\mu$m or more, 3 $\mu$m or more, or 5 $\mu$m or more. The average particle diameter of $SiO_x$ (0<x<2) may be, for example, about 1 $\mu$m to about 30 $\mu$m, about 3 $\mu$m to about 20 $\mu$m, or about 5 $\mu$m to about 15 $\mu$m.

The shell includes a first metal oxide and a first carbonaceous material.

Since the first carbonaceous material, for example, graphene has high electronic conductivity, the interfacial resistance between the composite anode active material and the electrolyte may be reduced. Accordingly, an increase in the internal resistance of the lithium battery is suppressed despite the introduction of the shell including the first carbonaceous material. The first carbonaceous material included in the shell of the composite anode active material may be derived from a graphene matrix, meaning that the density thereof is relatively low and porosity is high, compared to carbon-based materials of the related art derived from a graphite-based material. The d002 interplanar distance of the first carbonaceous material included in the shell of the composite anode active material may be, for example, 3.38 Å or more, 3.40 Å or more, 3.45 Å or more, 3.50 Å or more, 3.60 Å or more, 3.80 Å or more, or 4.00 Å or more. The d002 interplanar distance of the first carbonaceous material included in the shell of the composite anode active material may be, for example, about 3.38 Å to about 4.00 Å, about 3.38 Å to about 3.80 Å, about 3.38 Å to about 3.60 Å, about 3.38 Å to about 3.50 Å, or about 3.38 Å to about 3.45 Å. On the other hand, the d002 interplanar distance of the carbonaceous material of the related art derived from the graphite-based material may be, for example, 3.38 Å or less, or 3.35 Å to 3.38 Å. Since the first metal oxide has voltage resistance, the deterioration of the core during charging and discharging at a high voltage may be prevented. The shell may include, for example, one kind of first metal oxide or two or more kinds of different first metal oxides. As a result, the cyclic characteristics of the lithium battery including the composite anode active material is improved, and the volume change thereof may be suppressed.

The amount of the shell may be about 0.1 wt% to about 5 wt%, about 0.1 wt% to about 4 wt%, about 0.1 wt% to about 3 wt%, or about 0.1 wt% to about 2 wt% of the total weight of the composite anode active material. The amount of the first metal oxide may be, for example, about 0.06 wt% to about 3 wt%, about 0.06 wt% to about 2.4 wt%, about 0.06 wt% to about 1.8 wt%, or 0.06 wt% to 1.2 wt% of the total weight of the composite anode active material. Since the composite anode active material includes these amount ranges of the shell and the first metal oxide, the cyclic characteristics of the lithium battery are further improved.

The shell includes a first metal, and the amount of the first metal may be, for example, about 0.1 at% to about 10 at%, about 0.5 at% to about 7 at%, or about 1 at% to about 5 at%, based on the total number of atoms of the shell. When the shell includes these amount ranges of the first metal, cyclic characteristics of the lithium battery including the composite anode active material may be further improved. The amount of a first metal element included in the shell may be obtained from, for example, a peak obtained by measuring an XPS spectrum on the surface of the composite anode active material. The first metal may be a metal included in the first metal oxide.

The shell may include oxygen (O), and the amount of oxygen (O) may be, for example, about 6 at% to about 20 at%, about 7 at% to about 15 at%, about 8 at% to about 15 at%, or about 10 at% to about 15 at%, based on the total number of atoms in the shell. When the shell includes these amount ranges of the oxygen, cyclic characteristics of the lithium battery including the composite anode active material may be further improved. The amount of oxygen (O) included in the shell may be obtained from, for example, a peak obtained by measuring an XPS spectrum on the surface of the composite anode active material.

In one or more embodiments, the shell may include aluminum (Al) as the first metal, and the amount of aluminum (Al) may be, for example, about 0.1 at% to about 10 at%, about 0.5 at% to about 10 at%, about 1 at% to about 9 at%, about 1 at% to about 7 at%, or about 1 at% to about 5 at%, based on the total number of atoms of the shell. When the shell includes these amount ranges of aluminum, cyclic characteristics of the lithium battery including the composite anode active material may be further improved. The amount of aluminum (Al) included in the shell may be obtained from, for example, a peak obtained by measuring an XPS spectrum on the surface of the composite anode active material.

The shell includes carbon (C), and the amount of carbon (C) may be, for example, about 70 at% to about 95 at%, about 70 at% to about 90 at%, about 75 at% to about 90 at%, about 80 at% to about 90 at%, about 80 at% to about 87 at%, or about 80 at% to about 85 at%, based on the total number of atoms of the shell. When the shell includes these amount ranges of carbon, cyclic characteristics of the lithium battery including the composite anode active material may be further improved. The amount of carbon included in the shell may be obtained from, for example, a peak obtained by measuring an XPS spectrum on the surface of the composite anode active material.

The first metal oxide may include the first metal, and the first metal may be, for example, at least one selected from Al, Nb, Mg, Sc, Ti, Zr, V, W, Mn, Fe, Co, Pd, Cu, Ag, Zn, Sb, and Se. The first metal oxide may be, for example, at least one selected from $Al_2O_z$(0<z<3), $NbO_x$(0<x<2.5), $MgO_x$(0<x<1), $Sc_2O_z$(0<z<3), $TiO_y$(0<y<2), $ZrO_y$(0<y<2), $V_2O_z$(0<z<3), $WO_y$(0<y<2), $MnO_y$(0<y<2), $Fe_2O_z$(0<z<3), $Co_3O_w$(0<w<4), $PdO_x$(0<x<1), $CuO_x$(0<x<1), $AgO_x$(0<x<1), $ZnO_x$(0<x<1), $Sb_2O_z$(0<z<3), and $SeO_y$(0<y<2). Since such a first metal oxide is placed in the matrix of a carbonaceous material, uniformity of the shell placed on the core is improved, and voltage resistance of the composite anode active material may be further improved. For example, the shell includes $Al_2O_x$(0<x<3) as the first metal oxide.

The shell may further include at least one kind of second metal oxide represented by $M_aO_c$(0<a≤3, 0<c≤4, when a is 1, 2, or 3, c is an integer). M is at least one metal selected from Group 2 to Group 13, Group 15, and Group 16 of the Periodic Table of Elements. For example, the second metal oxide includes the same metal as the first metal oxide, and the ratio c/a of c to a in the second metal oxide is greater than the ratio b/a of b to a in the first metal oxide. For example, c/a>b/a. The second metal oxide may be selected from $Al_2O_3$, NbO, $NbO_2$, $Nb_2O_5$, MgO, $Sc_2O_3$, $TiO_2$, $ZrO_2$, $V_2O_3$, $WO_2$, $MnO_2$, $Fe_2O_3$, $Co_3O_4$, PdO, CuO, AgO, ZnO, $Sb_2O_3$, and $SeO_2$. The first metal oxide may be, for example, a reduction product of the second metal oxide. The first metal oxide is obtained by reducing a part or all of the second metal oxide. Accordingly, the first metal oxide has a lower oxygen amount and a lower metal oxidation number than the second metal oxide. For example, the shell may include $Al_2O_x$ (0<x<3) as the first metal oxide and $Al_2O_3$ as the second metal oxide.

The shell includes at least one first metal oxide and may further include at least one second metal oxide. The particle diameter of one or more selected from the first metal oxide and the second metal oxide may be, for example, about 1 nm to about 100 nm, about 1 nm to about 50 nm, about 1 nm to about 30 nm, about 5 nm to about 30 nm, or about 10 nm to about 30 nm. Within these nanometer ranges of a particle diameter, the first metal oxide and/or the second metal oxide may be more uniformly distributed in the matrix of the first carbonaceous material of the shell. When the particle diameter of at least one of the first metal oxide and the second metal oxide is excessively increased, the internal resistance of the composite anode active material may be increased due to the increase in the thickness of the shell. When the particle diameter of at least one of the first metal oxide and the second metal oxide is excessively reduced, uniform dispersion may be difficult.

The shell includes the first metal oxide and a first carbonaceous material and may further include the second metal oxide. The first carbonaceous material may be located in a direction protruding from the surface of the first metal oxide and/or the second metal oxide. Since the first carbonaceous material grows directly from the surface of the first metal oxide and/or the second metal oxide, the first carbonaceous material may be located in a direction protruding from the surface of the first metal oxide and/or the second metal oxide. The first carbonaceous material located in a direction protruding from the surface of the first metal oxide and/or the second metal oxide may be, for example, two-dimensional carbonaceous nanostructures, carbonaceous flakes, or graphene.

The shell includes a first carbonaceous material, and the core includes a silicon-containing structure and/or a silicon-containing compound as a silicon-containing anode active material. For example, the first carbonaceous material may be formed as a composite through a mechanochemical reaction with the silicon-containing structure and/or the silicon-containing compound. The first carbonaceous material may be chemically bonded to, for example, a silicon-containing structure and/or a silicon-containing compound through chemical bonding. The core and the shell may be formed as a composite by chemically bonding the first carbonaceous material located in the shell and the silicon-containing structure and/or the silicon-containing compound located in the core through chemical bonding. Accordingly, the composite anode active material is distinguished from a simple physical mixture of the first carbonaceous material and the silicon-containing structure and/or the silicon-containing compound. The first metal oxide and the carbonaceous material included in the shell may also be chemically bound to each other through a chemical bond. Here, the chemical bond may be, for example, a covalent bond or an ionic bond.

The thickness of the shell may be, for example, from about 1 nm to about 5 $\mu$m, from about 1 nm to about 1 $\mu$m, from about 1 nm to about 500 nm, from about 1 nm to about 200 nm, from about 1 nm to about 100 nm, from about 1 nm to about 50 nm, from about 1 nm to about 30 nm, or from about 1 nm to about 20 nm. When the shell has these ranges of thickness, the electronic conductivity of the anode including the composite anode active material may be further improved.

The shell located on and conformed to the surface of the core may include, for example, at least one of: a composite including a first metal oxide and a first carbonaceous material, for example, graphene; and a result of milling the composite. The first metal oxide is located in a matrix of the first carbonaceous material, for example, a graphene matrix. The shell may be manufactured from, for example, a composite including a first metal oxide and a first carbonaceous material, for example, graphene. The composite may further include a second metal oxide in addition to the first metal oxide. The composite may include, for example, two or more kinds of first metal oxides. The composite may include, for example, two or more kinds of first metal oxides and two or more kinds of second metal oxides.

The amount of at least one of the composite and the milling result thereof may be 5 wt% or less, 3 wt% or less, 2 wt% or less, 1 wt% or less, or 0.5 wt% or less of the total weight of the composite anode active material. The amount of at least one of the composite and the milling result thereof included in the composite anode active material may be, for example, about 0.1 wt% to about 5 wt%, about 0.1 wt% to about 4 wt%, about 0.1 wt% to about 3 wt%, or about 0.1 wt% to about 2 wt%. When the composite anode active material includes these amount ranges of at least one of the composite and the milling result thereof, cyclic characteristics of a lithium battery including the composite anode active material may be further improved.

The composite may include at least one selected from the first metal oxide and the second metal oxide. The particle diameter of one or more particle diameters selected from the first metal oxide and the second metal oxide may be, for example, about 1 nm to about 100 nm, about 1 nm to about 50 nm, about 1 nm to about 30 nm, about 5 nm to about 30 nm, or about 10 nm to about 30 nm. Within these nanometer ranges of a particle diameter, the first metal oxide and/or the second metal oxide may be more uniformly distributed in the matrix of the first carbonaceous material of the composite. Therefore, such a composite may be uniformly applied on the core to form a shell. Further, the first metal oxide and/or the second metal oxide may be more evenly located on the core because the first metal oxide and/or the second metal oxide has a particle diameter within this nanometer range. Therefore, the first metal oxide and/or the second metal oxide may be uniformly located on the core, thereby more effectively exhibiting voltage resistance characteristics. The average particle diameter of the first metal oxide and the second metal oxide is measured by a measurement apparatus using a laser diffraction method or a dynamic light scattering method. The particle diameter thereof is measured using a scattering particle size distribution meter (for example, LA-920 of Horiba Corporation), and is a value of the median diameter (D50) when the metal oxide particles are accumulated to 50 % from smaller particles in volume conversion. The uniformity deviation of at least one selected from the first metal oxide and second metal oxide may be 3 % or less, 2 % or less, or 1 % or less. The uniformity may be obtained, for example, by XPS. Accordingly, at least one selected from the first metal oxide and second metal oxide may have a uniformity deviation of 3 % or less, 2 % or less, or 1 % or less, and may be uniformly distributed in the composite.

The composite includes a first carbonaceous material. The first carbonaceous material may have, for example, a branched structure, and at least one metal oxide selected from the first metal oxide and the second metal oxide may be distributed in the branched structure of the first carbonaceous material. The branched structure of the first carbonaceous material includes, for example, a plurality of particles of the first carbonaceous material in contact with each other. Since the first carbonaceous material may have a branched structure, various conduction paths may be provided. The first carbonaceous material may be, for example, graphene. Graphene may have, for example, a branched structure, and at least one metal oxide selected from a first metal oxide and a second metal oxide may be distributed in the branched structure of graphene. The branched structure of the graphene includes a plurality of graphene particles contacting each other. Since the graphene may have a branched structure, various conduction paths may be provided.

The first carbonaceous material may have, for example, a spherical structure, and at least one metal oxide selected from the first metal oxide and the second metal oxide may be distributed in the spherical structure thereof. The size of the spherical structure of the first carbonaceous material may be from about 50 nm to about 300 nm. There may be a plurality of first carbonaceous materials having a spherical structure. Since the first carbonaceous material may have a spherical structure, the composite may have a rigid structure. The first carbonaceous material may be, for example, graphene. Graphene may have, for example, a spherical structure, and at least one metal oxide selected from the first metal oxide and the second metal oxide may be distributed in the spherical structure thereof. The spherical structure of the graphene may have a size of about 50 nm to 300 nm. A plurality of graphene having a spherical structure may be provided. Since the graphene may have a spherical structure, the composite may have a robust structure.

The first carbonaceous material may have a spiral structure in which a plurality of spherical structures are connected to each other, and at least one metal oxide selected from the first metal oxide and the second metal oxide may be distributed within the spherical structure of the spiral structure. The size of the spiral structure of the first carbonaceous material may be from about 500 nm to about 100 $\mu$m. Since the first carbonaceous material may have a spiral structure, the composite may have a rigid structure. The first carbonaceous material may be, for example, graphene. The graphene may have a spiral structure in which a plurality of spherical structures are connected to each other, and at least one metal oxide selected from the first metal oxide and the second metal oxide may be distributed within the spherical structure of the spiral structure. The spiral structure of the graphene may have a size of about 500 nm to 100 mm. Since the graphene may have a spiral structure, the composite may have a robust structure.

The first carbonaceous material may have a cluster structure in which a plurality of spherical structures are aggregated, and at least one metal oxide selected from the first metal oxide and the second metal oxide may be distributed within the spherical structure of the cluster structure. The size of the cluster structure of the first carbonaceous material may be from about 0.5 mm to about 10 mm. Since the first carbonaceous material may have a cluster structure, the composite may have a rigid structure. The first carbonaceous material may be, for example, graphene. Graphene may have a cluster structure in which a plurality of spherical structures are aggregated, and at least one metal oxide selected from the first metal oxide and the second metal oxide may be distributed within the spherical structure of the cluster structure. The cluster structure of the graphene may have a size of about 0.5 mm to 10 mm. Since the graphene may have a cluster structure, the composite may have a robust structure.

The composite may be a crumpled faceted-ball structure, and at least one selected from the first metal oxide and the second metal oxide may be distributed inside the structure or on the surface of the structure. Since the composite may be such a faceted-ball structure, the composite may be easily applied on the surface irregularities of the core.

The composite may be, for example, a planar structure, and at least one selected from the first metal oxide and the second metal oxide may be distributed inside the structure or on the surface of the planar structure. Since the composite may be such a two-dimensional planar structure, the composite may be easily applied on the irregular surface of the core.

The first carbonaceous material may extend by a distance of 10 nm or less from the first metal oxide, and may include at least 1 to 20 first carbonaceous material layers. For example, since the plurality of first carbonaceous material layers may be stacked, the first carbonaceous material having a total thickness of 12 nm or less may be located on the first metal oxide. For example, the total thickness of the carbonaceous material may be from about 0.6 nm to about 12 nm. The first carbonaceous material may be, for example, graphene. The graphene may extend by a distance of 10 nm or less from the first metal oxide, and may include at least 1 to 20 graphene layers. For example, since a plurality of graphene layers may be stacked, graphene having a total thickness of 12 nm or less may be disposed on the first metal oxide. For example, the total thickness of graphene may be about 0.6 nm to about 12 nm.

The shell may further include a second carbonaceous material that is fibrous carbon. The second carbonaceous material may include fibrous carbon.

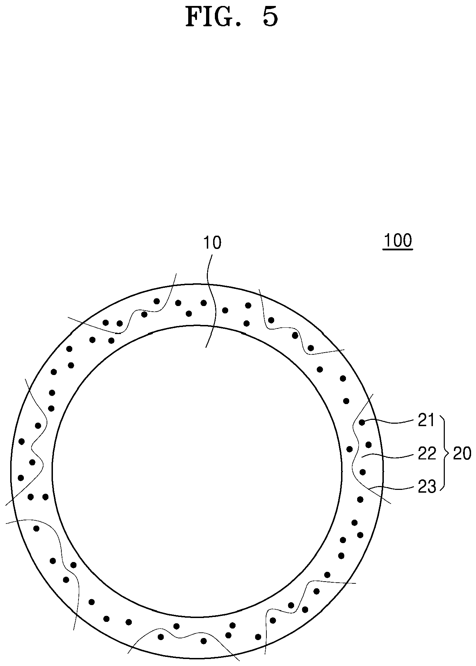

When the shell further includes a second carbonaceous material that is fibrous carbon, a conduction path of the composite anode active material may be further lengthened. The second carbonaceous material may form a three-dimensional conductive network among the plurality of composite anode active materials to reduce internal resistance of the anode including the composite anode active material. Since the fibrous carbon may be fixed on the composite anode active material, a uniform and stable three-dimensional conductive network can be formed among the plurality of composite anode active materials. Accordingly, the high rate characteristics of a lithium battery including the composite anode active material including the second carbonaceous material may be improved. Referring to FIG. 5, a composite anode active material 100 includes a core 10 and a shell 20 located on and conformed to the surface of the core 10. The core 10 may include a lithium transition metal oxide, and the shell 20 may include a first metal oxide 21, a first carbonaceous material 22, and a second carbonaceous material 23. The second carbonaceous material 23 may include, for example, fibrous carbon having an aspect ratio of 10 or more. In contrast, in the case of a simple mixture of a core and fibrous carbon, it is difficult to form a uniform three-dimensional conductive network among a plurality of core particles due to aggregation of fibrous carbon or the like. Since the second carbonaceous material 23 is located within the matrix of the first carbonaceous material 22, the second carbonaceous material 23 may be easily coated on the core 10. The matrix of the first carbonaceous material 22 may act as a binder for binding the core 10 and the second carbonaceous material 23. Therefore, when the first carbonaceous material 22 does not exist, it is difficult for the second carbonaceous material 23 to be easily attached on the core 10 or the second carbonaceous material 23 may be easily detached from the core 10 in the slurry manufacturing process. When a binder is added to bind the core 10 and the second carbonaceous material 23, since the core 10 is covered by the insulating binder, the internal resistance of the composite anode active material 100 may be increased. When the second carbonaceous material 23 and the core 10 coated with the binder are subjected to high-temperature heat treatment in order to carbonize the binder, the core 10 and the second carbonaceous material 23 may deteriorate during the heat treatment process.

The aspect ratio of the second carbonaceous material may be 10 or more or 20 or more. The aspect ratio of the second carbonaceous material may be, for example, about 10 to about 100,000, about 10 to about 80,000, about 10 to about 50,000, about 10 to about 10,000, about 10 to about 5000, about 10 to about 1000, about 10 to about 500, about 10 to about 100, or about 10 to about 50. The aspect ratio of the second carbonaceous material may be, for example, the ratio of the length of the major axis passing through the center of the second carbonaceous material to the length of the minor axis passing through the center of the second carbonaceous material and perpendicular to the major axis, that is, the diameter of the second carbonaceous material.

The diameter of the second carbonaceous material may be, for example, 50 nm or less, 30 nm or less, 20 nm or less, or 10 nm or less. The diameter of the second carbonaceous material may be, for example, from about 1 nm to about 50 nm, from about 1 nm to about 30 nm, or about 1 nm to about 10 nm. When the diameter of the second carbonaceous material is excessively large, the absolute number of strands per volume may be decreased, and thus the effect of reducing internal resistance may be insignificant. When the diameter of the second carbonaceous material is too small, uniform dispersion may be difficult.

The length of the second carbonaceous material may be, for example, 1000 $\mu$m or less, 100 $\mu$m or less, 50 $\mu$m or less, 10 $\mu$m or less, 5 $\mu$m or less, 2 $\mu$m or less, 1 $\mu$m or less, 500 nm or less, or 300 nm or less. The length of the second carbonaceous material may be, for example, about 100 nm to about 1000 $\mu$m, about 100 nm to about 500 $\mu$m, about 100 nm to about 100 $\mu$m, about 100 nm to about 50 $\mu$m, about 100 nm to about 10 $\mu$m, about 100 nm to about 5 $\mu$m, about 100 nm to about 2 $\mu$m, about 100 nm to about 1 $\mu$m, about 100 nm to about 500 nm, or 100 nm to about 300 nm. The length of the second carbonaceous material may be, for example, about 500 nm to about 1000 $\mu$m, about 500 nm to about 500 $\mu$m, about 500 nm to about 100 $\mu$m, about 500 nm to about 50 $\mu$m, about 500 nm to about 10 $\mu$m, about 500 nm to about 5 $\mu$m, or about 500 nm to about 2 $\mu$m. As the length of the second carbonaceous material is increased the internal resistance of the electrode may decrease. When the length of the second carbonaceous material is too short, it may be difficult to provide an effective conductive path.

The second carbonaceous material may include, for example, carbon nanofibers, carbon nanotubes, or a combination thereof.

The carbon nanotube may include, for example, a carbon nanotube primary structure, a carbon nanotube secondary structure formed by aggregation of a plurality of carbon nanotube primary particles, or a combination thereof.

The carbon nanotube primary structure is one carbon nanotube unit. The carbon nanotube unit has a graphite sheet in a cylindrical shape with a nano-size diameter, and has a sp2 binding structure. According to the bending angle and structure of the graphite surface, the characteristics of the conductor or the characteristics of the semiconductor may be exhibited. Carbon nanotube units may be classified as single-walled carbon nanotube (SWCNT), double-walled carbon nanotube (DWCNT), and multi-walled carbon nanotube (MWCN), depending on the number of bonds forming the wall. The thinner the wall thickness of the carbon nanotube unit, the lower the resistance.

Carbon nanotube units may be classified as single-walled carbon nanotube (SWCNT), double-walled carbon nanotube (DWCNT), multi-walled carbon nanotube (MWCN) or a combination thereof. The diameter of the carbon nanotube primary structure may be, for example, 1 nm or more or 2 nm or more. The diameter of the carbon nanotube primary structure may be, for example, 20 nm or less or 10 nm or less. The diameter of the carbon nanotube primary structure may be, for example, about 1 nm to about 20 nm, about 1 nm to about 15 nm, or about 2 nm to about 10 nm. The length of the carbon nanotube primary structure may be, for example, 100 nm or more or 200 nm or more. The length of the carbon nanotube primary structure may be, for example, 2 $\mu$m or less, 1 $\mu$m or less, 500 nm or less, or 300 nm or less. The length of the carbon nanotube primary structure may be, for example, about 100 nm to about 2 $\mu$m, about 100 nm to about 1 $\mu$m, about 100 nm to about 500 nm, about 100 nm to about 400 nm, about 100 nm to about 300 nm, or 200 nm to about 300 nm. The diameter and length of the carbon nanotube primary structure may be measured from a scanning electron microscope (SEM) image. Alternatively, the diameter and/or length of the carbon nanotube primary structure may be measured by a laser diffraction method.

The carbon nanotube secondary structure is a structure formed by assembling the carbon nanotube primary structures to form a bundle-type or rope-type carbon nanotube in whole or in part. The carbon nanotube secondary structure may include, for example, a bundle-type carbon nanotube, a rope-type carbon nanotube, or a combination thereof. The diameter of the carbon nanotube secondary structure may be, for example, 2 nm or more or 3 nm or more. The diameter of the carbon nanotube secondary structure may be, for example, 50 nm or less, 30 nm or less, or 10 nm or less. The diameter of the carbon nanotube secondary structure may be, for example, about 2 nm to about 50 nm, about 2 nm to about 30 nm, or about 2 nm to about 20 nm. The length of the carbon nanotube secondary structure may be, for example, 500 nm or more, 700 nm or more, 1 $\mu$m or more, or 10 $\mu$m or more. The length of the carbon nanotube secondary structure may be, for example, 1000 $\mu$m or less, 500 $\mu$m or less, or 100 $\mu$m or less. The length of the carbon nanotube secondary structure may be, for example, about 500 nm to about 1000 $\mu$m, about 500 nm to about 500 $\mu$m, about 500 nm to about 200 $\mu$m, about 500 nm to about 100 $\mu$m, or about 500 nm to about 50 $\mu$m. The diameter and length of the carbon nanotube secondary structure may be measured from an image or an optical microscope. Alternatively, the diameter and/or length of the carbon nanotube secondary structure may be measured by a laser diffraction method. In an embodiment, the carbon nanotube secondary structure may be used for the preparation of a composite anode active material after being converted into carbon nanotube primary structure by dispersion of the same in a solvent or the like.

The amount of the second carbonaceous material may be, for example, about 0.1 wt% to about 50 wt%, about 1 wt% to about 40 wt%, or about 5 wt% to about 30 wt%, based on the total weight of the first carbonaceous material and the second carbonaceous material. Since the composite anode active material may include these amount ranges of the first carbonaceous material and the second carbonaceous material, a conduction path is more effectively secured in the composite positive active material, so that the internal resistance of the composite anode active material may be further reduced. As a result, the cyclic characteristics of the lithium battery including the composite anode active material may be further improved. The amount of the second carbonaceous material may be, for example, about 0.001 wt% to about 5 wt%, about 0.01 wt% to about 3 wt%, or about 0.01 wt% to about 1 wt%, based on the total weight of the composite anode active material. Since the composite anode active material may include these amount ranges of the second carbonaceous material, a conduction path is secured in the composite anode active material, so that the internal resistance of the composite anode active material may be further reduced. As a result, the cyclic characteristics of the lithium battery including the composite anode active material may be further improved.

The specific surface area of the composite anode active material may be, for example, about 1 m$^2$/g to about 100 m$^2$/g, about 1 m$^2$/g to about 50 m$^2$/g, or about 1 m$^2$/g to about 30 m$^2$/g. Since the composite anode active material may have these ranges of specific surface area, cyclic characteristics of a lithium battery using the composite anode active material may be further improved. The average particle diameter (D50) of the composite anode active material may be, for example, about 1 $\mu$m to about 30 $\mu$m, about 3 $\mu$m to about 20 $\mu$m, or about 5 $\mu$m to about 15 $\mu$m. The particle diameter (D10) of the composite anode active material may be, for example, about 0.1 $\mu$m to about 10 $\mu$m, about 0.5 $\mu$m to about 10 $\mu$m, or about 1 $\mu$m to about 10 $\mu$m. The particle diameter (D90) of the composite anode active material may be, for example, about 10 $\mu$m to about 50 $\mu$m, about 10 $\mu$m to about 30 $\mu$m, or about 10 $\mu$m to about 25 $\mu$m. When the composite anode active material has these ranges of an average particle diameter (D50), particle diameter (D10), and/or particle diameter (D90), cyclic characteristics of a lithium battery including the composite anode active material may be further improved.

An anode according to an embodiment includes the composite anode active material. When the anode includes the composite anode active material, improved cyclic characteristics and reduced volume change may be provided.

The anode may be prepared by using, for example, a wet method. The anode may be manufactured by the following example method, but the disclosure is not necessarily limited to this method and is adjusted according to required conditions.

First, an anode active material composition is prepared by mixing the composite anode active material, a conductive material, a binder, and a solvent. The prepared anode active material composition is coated directly on a copper current collector and dried to prepare an anode plate having an anode active material layer. Alternatively, a film obtained by casting the anode active material composition on a separate support and then exfoliating the composition from the support is laminated on a copper current collector to form an anode plate including an anode active material layer.

As the conductive material, carbon black, graphite fine particles, natural graphite, artificial graphite, acetylene black, Ketjen black, carbon fiber; carbon nanotubes; metal powder, metal fiber or metal tubes of, for example, copper, nickel, aluminium, or silver; or conductive polymers such as polyphenylene derivatives may be used, but the disclosure is not limited thereto. Any conductive material may be used as long as it is used in the art.

As a binder, vinylidene fluoride/hexafluoropropylene copolymer, polyvinylidene fluoride, polyacrylonitrile, polymethyl methacrylate, polytetrafluoroethylene (PTFE), a mixture of these polymers, styrene butadiene rubber-based polymer, polyacrylic acid, lithium-substituted polyacrylic acid, polyamideimide, polyimide, etc. may be used, but are not limited thereto, and any one used in the art may be used.

As the solvent, N-methylpyrrolidone (NMP), acetone, water, etc. may be used, but are not limited thereto, and any solvent used in the art may be used.

A plasticizer or a pore former may be further added to the anode active material composition to form pores inside the electrode plate.

The amounts of the composite anode active material, the conductive material, the binder, and the solvent used in the anode may be such levels that are normally used in lithium batteries. Depending on the use and configuration of the lithium battery, one or more of the conductive material, the binder, and the solvent may be omitted.

The amount of the binder included in the anode may be about 0.1 wt% to about 10 wt% or about 0.1 wt% to about 5 wt% based on the total weight of the anode active material layer. The amount of the binder included in the anode may be about 0.1 wt% to about 10 wt% or about 0.1 wt% to about 5 wt% based on the total weight of the anode active material layer. The amount of the composite anode active material included in the anode may be about 0.1 wt% to about 99 wt%, about 0.1 wt% to about 90 wt%, about 0.1 wt% to about 50 wt%, about 0.1 wt% to about 30 wt%, about 0.1 wt% to about 20 wt%, or about 0.1 wt% to about 10 wt%, based on the total weight of the anode active material layer.

The anode may additionally include an anode active material of the related art other than the composite anode active material.

The anode active material of the related art includes, for example, at least one selected from lithium metal, a lithium-alloyable metal, a transition metal oxide, a non-transition metal oxide, and a carbonaceous material, but is not limited thereto. Any material may be used herein as long as it is used as an anode active material for a lithium battery in the art.

Examples of the lithium-alloyable metal include Si, Sn, Al, Ge, Pb, Bi, Sb, an SiX alloy (X is an alkali metal, an alkali-earth metal, a Group 13 element, a Group 14 element, a transition metal, a rare earth element, or a combination thereof, not Si), and an Sn-X alloy (X is an alkali metal, an alkali-earth metal, a Group 13 element, a Group 14 element, a transition metal, a rare earth element, or a combination thereof, not Sn). Element X may be for example Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof.

The transition metal oxide may be, for example, lithium titanium oxide, vanadium oxide, lithium vanadium oxide or the like.

The non-transition metal oxide may be, for example, $SnO_2$ or the like.

The carbonaceous material may be, for example, crystalline carbon, amorphous carbon, or a mixture thereof. The crystalline carbon may be, for example, graphite such as shapeless, plate-like, flake-like, spherical or fibrous natural graphite or artificial graphite. The amorphous carbon may be, for example, soft carbon (low-temperature fired carbon), hard carbon, mesophase pitch carbide, or fired coke.

The total amount of the composite anode active material and the anode active material of the related art included in the anode may be about 80 wt% to about 99 wt%, about 90 wt% to about 99 wt%, or about 90 wt% to about 95 wt%, based on the total weight of the anode active material layer.

In an embodiment, the anode may be a dry anode which is prepared by a dry method.

The dry anode may include a dry composite anode active material, a dry conductive material, and a dry binder, the dry composite anode active material includes a core and a shell located on and conformed to the surface of the core, wherein the core includes a silicon-containing structure, a silicon-containing compound, or a combination thereof, the shell includes at least one first metal oxide represented by Formula $M_aO_b$ ($0<a\leq3$, $0<b<4$, and when a is 1, 2, or 3, b is not an integer), and a first carbonaceous material, and the first metal oxide is placed in a first carbonaceous material, and M is at least one metal selected from Group 2 to Group 13, Group 15, and Group 16 of the Periodic Table of Elements.

In an embodiment, a method of preparing a dry anode may include: preparing a dry mixture by dry mixing a dry composite anode active material, a dry conductive material, and a dry binder; providing an anode current collector; disposing a middle layer on one side of the anode current collector; and placing the dry mixture on the middle layer and roll-pressing the same to arrange the anode active material layer on one surface of the anode current collector.

First, a dry mixture is prepared by dry mixing a dry composite anode active material, a dry conductive material, and a dry binder. Dry mixing refers to mixing while a process solvent is not included. The process solvent refers to, for example, solvents used in the preparation of electrode slurries. The process solvent referred to may be, for example, water, NMP, etc., but is not limited thereto, and any process solvent that is used in the preparation of an electrode slurry, may be referred to herein. Dry mixing may be performed using a stirrer at the temperature of, for example, 25 °C to 65 °C. Dry mixing may be performed using a stirrer at a rotation speed of, for example, about 10 rpm to about 10000 rpm, or about 100 rpm to about 10000 rpm. Dry mixing may be performed using a stirrer, for example, for about 1 minute to about 200 minutes, or about 1 minute to about 150 minutes. The composite anode active material may be a dry composite anode active material.

Dry mixing may be performed, for example, one or more times. First, a first mixture may be prepared by first dry mixing a dry composite anode active material, a dry conductive material, and a dry binder. The primary dry mixing may be performed, for example, at a temperature of 25 °C to 65 °C, at a rotation speed of 2000 rpm or less, and for 15 minutes or less. The primary dry mixing may be performed, for example, at a temperature of about 25 °C to about 65 °C, at a rotation speed of about 500 rpm to about 2000 rpm, for about 5 minutes to about 15 minutes. The dry composite anode active material, the dry conductive material, and the dry binder may be uniformly mixed by the primary dry mixing. Subsequently, a second mixture may be prepared by second dry mixing a dry composite anode active material, a dry conductive material, and a dry binder. The secondary dry mixing may be performed, for example, at a temperature of 25 °C to 65 °C, at a rotation speed of 4000 rpm or more, and for 10 minutes or more. The secondary dry mixing may be performed, for example, at a temperature of 25 °C to 65 °C, at a rotation speed of about 4000 rpm to about 9000 rpm, for 10 minutes to 60 minutes. A dry mixture including a fibrillated dry binder may be obtained by secondary dry mixing.

The stirrer may be, for example, a kneader. The stirrer may include: for example, a chamber; one or more rotating shafts which are located inside the chamber and rotate; and a blade rotatably coupled to the rotation shafts and located in the longitudinal direction of the rotation shafts. The blade may be, for example, one or more selected from a ribbon blade, a sigma blade, a jet (Z) blade, a dispersion blade, and a screw blade. By including the blade, it is possible to prepare a dough-like mixture by effectively mixing the dry anode composite active material, the dry conductive material, and the dry binder without a solvent.

The prepared dry mixture may be introduced into an extrusion device and extruded in the form of a sheet. The pressure at the time of extrusion may be, for example, about 4 MPa to about 100 MPa, or about 10 MPa to about 90 MPa. The obtained sheetform extrudate may be a sheet for an anode active material layer.

As the dry conductive material, carbon black, graphite fine particles, natural graphite, artificial graphite, acetylene black, Ketjen black, carbon fiber; carbon nanotubes; metal powder, metal fiber or metal tubes of, for example, copper, nickel, aluminium, or silver; or conductive polymers such as polyphenylene derivatives may be used, but the disclosure is not limited thereto. Any conductive material may be used as long as it is used in the art. The conductive material may be, for example, a carbonaceous conductive material. The dry conductive material may be a conductive material that has not been in contact with the process solvent.

Examples of the dry binder include vinylidene fluoride/hexafluoropropylene copolymer, polyvinylidene fluoride, polyacrylonitrile, polymethylmethacrylate, polytetrafluoroethylene (PTFE), mixtures of these polymers, and a styrene butadiene rubber-based polymer, but are not necessarily limited thereto, and any material that is used in the art may be used herein. The dry binder may be, for example, polytetrafluoroethylene (PTFE). A dry binder may be a binder that has not been in contact with the process solvent.

A plasticizer or a pore former may be further added to the dry mixture to form pores inside the anode active material layer.

The amounts of the dry composite anode active material, the dry conductive material, and the dry binder used in the anode active material layer are in the same ranges as those applied for the wet anode.

Next, an anode current collector is provided. The anode current collector may be, for example, aluminium foil.

Then, a middle layer is disposed on at least one surface of the anode current collector. The middle layer may include a carbonaceous conductive material and a binder. The middle layer may be omitted.

Then, the prepared anode active material layer sheet is arranged on the middle layer and roll-pressed to dispose the anode active material layer on one surface of the anode current collector, thereby completing the preparation of an anode. A middle layer may be located between the anode current collector and the anode active material layer. The roll-pressing may be, for example, a roll press, a flat press, or the like, but is not necessarily limited thereto. The pressure at the time of roll-pressing may be, for example, about 0.1 ton/cm$^2$ to about 10.0 ton/cm$^2$, but is not limited to this range. When the pressure during roll-pressing is excessively increased, the anode current collector may crack. When the pressure during roll-pressing is too low, the binding force between the anode current collector and the anode active material layer may be reduced.

A lithium battery according to an embodiment includes an anode including the composite anode active material.

Due to the inclusion of an anode including the composite anode active material, the lithium battery may provide improved cyclic characteristics and reduced volume change.

The lithium battery is manufactured, for example, by the following method, but the disclosure is not necessarily limited to this method and is adjusted according to required conditions.

First, an anode is manufactured according to the method of manufacturing the anode.

Next, a cathode active material composition in which a cathode active material, a conductive material, a binder, and a solvent are mixed, is prepared. The cathode active material composition is coated directly on an aluminium current collector and then dried to prepare a cathode plate. Alternatively, the cathode active material composition may be cast on a separate support, and then the film exfoliated from the support may be laminated on an aluminium current collector to manufacture a cathode plate.

As a cathode active material, any lithium-containing metal oxide may be used without limitation as long as it is used in the art. The cathode active material may be, for example, one or more types of a complex oxide of lithium and a metal selected from cobalt, manganese, nickel, and combinations thereof. The cathode active material may include, for example, at least one selected from the group consisting of lithium cobalt oxide, lithium nickel cobalt manganese oxide, lithium nickel cobalt aluminium oxide, lithium iron phosphate, and lithium manganese oxide, but is not necessarily limited thereto. Any material that is used as the cathode active material for a lithium battery may be used herein.

The cathode active material may be, for example, a compound represented by one of the following formulae: $Li_aA_{1-b}B'_bD_2$ (where $0.90 \le a \le 1.8$, and $0 \le b \le 0.5$); $Li_aE_{1-b}B'_bO_{2-c}D_c$ (where $0.90 \le a \le 1.8$, $0 \le b \le 0.5$, and $0 \le c \le 0.05$); $LiE_{2-b}B'_bO_{4-c}D_c$ (where $0 \le b \le 0.5$, and $0 \le c \le 0.05$); $Li_aNi_{1-b-c}Co_bB'_cD_\alpha$ (where $0.90 \le a \le 1.8$, $0 \le b \le 0.5$, $0 \le c \le 0.05$, and $0 < \alpha \le 2$); $Li_aNi_{1-b-c}Co_bB'_cO_{2-\alpha}F'_\alpha$ (where $0.90 \le a \le 1.8$, $0 \le b \le 0.5$, $0 \le c \le 0.05$, and $0 < \alpha < 2$); $Li_aNi_{1-b-c}Co_bB'_cO_{2-\alpha}F'_2$ (where $0.90 \le a \le 1.8$, $0 \le b \le 0.5$, $0 \le c \le 0.05$, and $0 < \alpha < 2$); $Li_aNi_{1-b-c}Mn_bB'_cD_\alpha$ (where $0.90 \le a \le 1.8$, $0 \le b \le 0.5$, $0 \le c \le 0.05$, and $0 < \alpha \le 2$); $Li_aNi_{1-b-c}Mn_bB'_cO_{2-\alpha}F'_\alpha$ (where $0.90 \le a \le 1.8$, $0 \le b \le 0.5$, $0 \le c \le 0.05$, and $0 < \alpha < 2$); $Li_aNi_{1-b-c}Mn_bB'_cO_{2-\alpha}F'_2$ (where $0.90 \le a \le 1.8$, $0 \le b \le 0.5$, $0 \le c \le 0.05$, and $0 < \alpha < 2$); $Li_aNi_bE_cG_dO_2$ (where $0.90 \le a \le 1.8$, $0 \le b \le 0.9$, $0 \le c \le 0.5$, and $0.001 \le d \le 0.1$); $Li_aNi_bCo_cMn_dG_eO_2$ (where $0.90 \le a \le 1.8$, $0 \le b \le 0.9$, $0 \le c \le 0.5$, $0 \le d \le 0.5$, and $0.001 \le e \le 0.1$); $Li_aNiG_bO_2$ (where $0.90 \le a \le 1.8$ and $0.001 \le b \le 0.1$); $Li_aCoG_bO_2$ (where $\le a \le 1.8$ and $0.001 \le b \le 0.1$); $Li_aMnG_bO_2$ (where $0.90 \le a \le 1.8$ and $0.001 \le b \le 0.1$); $Li_aMn_2G_bO_4$ (where $0.90 \le a \le 1.8$ and $0.001 \le b \le 0.1$); $QO_2$; $QS_2$; $LiQS_2$; $V_2O_5$; $LiV_2O_5$; $LiI'O_2$; $LiNiVO_4$; $Li_{(3-f)}J_2(PO_4)_3$ ($0 \le f \le 2$); $Li_{(3-f)}Fe_2(PO_4)_3$ ($0 \le f \le 2$); and $LiFePO_4$.

In the formulae above, A may be Ni, Co, Mn, or a combination thereof; B' may be Al, Ni, Co, Mn, Cr, Fe, Mg, Sr, V, a rare earth element, or a combination thereof; D may be O, F, S, P, or a combination thereof; E may be Co, Mn, or a combination thereof; F' may be F, S, P, or a combination thereof; G may be Al, Cr, Mn, Fe, Mg, La, Ce, Sr, V, or a combination thereof; Q may be Ti, Mo, Mn, or a combination thereof; I' may be Cr, V, Fe, Sc, Y, or a combination thereof; and J may be V, Cr, Mn, Co, Ni, Cu, or a combination thereof.

A compound in which a coating layer is provided on the surface of the above-described compound may be used, and a mixture of the above-described compound and the compound provided with the coating layer may also be used. The coating layer provided on the surface of the above-described compound may include a coating element compound such as oxide of a coating element, hydroxide of a coating element, oxyhydroxide of a coating element, oxycarbonate of a coating element, or hydroxycarbonate of a coating element. The compound constituting this coating layer is amorphous or crystalline. The coating element included in the coating layer may be Mg, Al, Co, K, Na, Ca, Si, Ti, V, Sn, Ge, Ga, B, As, Zr, or a mixture thereof. The method of forming the coating layer is selected within a range that does not adversely affect the physical properties of the cathode active material. The coating method is, for example, spray coating, dipping method, or the like. A detailed description of the coating method will be omitted because it may be well understood by those in the art.

The cathode active material may be, for example, $LiNiO_2$, $LiCoO_2$, $LiMn_xO_{2x}$ ($x=1, 2$), $LiNi_{1-x}Mn_xO_2$ ($0<x<1$), $LiNi_{1-x-y}Co_xMn_yO_2$ ($0 \le x \le 0.5$, $0 \le y \le 0.5$), $LiFeO_2$, $V_2O_5$, $TiS$, $MoS$, or the like.

The cathode active material may be, for example, $Li_aNi_xCo_yM_zO_{2-b}A_b$ ($1.0 \le a \le 1.2$, $0 \le b \le 0.2$, $0.8 \le x < 1$, $0 < y \le 0.3$, $0 < z \le 0.3$, $x+y+z=1$, M is at least one selected from manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al) and boron (B), and A may be F, S, Cl, Br, or a combination thereof), $LiNi_xCo_yMn_zO_2$ ($0.8 \le x \le 0.95$, $0 < y \le 0.2$, $0 < z \le 0.2$, and $x+y+z=1$), $LiNi_xCo_yAl_zO_2$ ($0.8 \le x \le 0.95$, $0 < y \le 0.2$, $0 < z \le 0.2$, and $x+y+z=1$), $LiNi_xCo_yAl_vMn_wO_2$ ($0.8 \le x \le 0.95$, $0 < y \le 0.2$, $0 < v \le 0.2$, $0 < w \le 0.2$, and $x+y+v+w=1$), or $Li_aNi_xMn_yM'_zO_{2-b}A_b$ ($1.0 \le a \le 1.2$, $0 \le b \le 0.2$, $0 < x \le 0.3$, $0.5 \le y < 1$, $0 < z \le 0.3$, and $x+y+z=1$, M' may be cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof, and A may be F, S, Cl, Br, or a combination thereof).

In regard to the cathode active material composition, the conductive material, the binder and the solvent which are used for the anode active material, may be used herein. Meanwhile, pores may be formed in an electrode plate by further adding a plasticizer to the cathode active material composition and/or the anode active material composition.

The amounts of the cathode active material, the conductive material, the binder, and the solvent are such levels that are normally used in lithium batteries. At least one of the conductive material, the binder, and the solvent may be omitted depending on the use and configuration of a lithium battery.

The amount of the binder included in the cathode may be, for example, about 0.1 wt% to about 10 wt% or about 0.1 wt% to about 5 wt%, based on the total weight of the cathode active material layer. The amount of the binder included in the cathode may be, for example, about 0.1 wt% to about 10 wt% or about 0.1 wt% to about 5 wt%, based on the total weight of the cathode active material layer. The amount of the cathode active material included in the cathode may be, for example, about 70 wt% to about 99 wt%, about 90 wt% to about 99 wt%, or about 95 wt% to about 99 wt%, based on the total weight of the cathode active material layer.

Next, a separator to be inserted between the cathode and the anode is prepared.

Any separator may be used as long as it is commonly used in lithium batteries. As the separator, for example, a separator having low resistance to ion movement of an electrolyte and an excellent electrolyte-wetting ability is used. The separator is a nonwoven fabric or a woven fabric including at least one selected from fiberglass, polyester, Teflon, polyethylene, polypropylene, polytetrafluoroethylene (PTFE), and a combination thereof. For a lithium-ion battery, for example, a rollable separator including polyethylene, polypropylene, or the like is used, and for a lithium-ion polymer battery, a separator having excellent organic electrolyte impregnation ability is used.

The separator is manufactured by the following method, but the disclosure is not necessarily limited to this method and is adjusted according to required conditions.

First, a polymer resin, a filler, and a solvent are mixed to prepare a separator composition. The separator composition is directly applied and dried on an electrode to form a separator. Alternatively, a film obtained by casting and drying the separator composition on a support and then separating the composition from the support is laminated on the electrode to form a separator.

The polymer used for manufacturing the separator is not particularly limited, and any polymer may be used as long as it is used for the binder of an electrode plate may be used. For example, as the polymer, a vinylidene fluoride/hexafluoropropylene copolymer, polyvinylidene fluoride (PVDF), polyacrylonitrile, polymethyl methacrylate, or a mixture thereof is used.

Next, an electrolyte is prepared.

The electrolyte is, for example, an organic electrolyte. The organic electrolyte is prepared, for example, by dissolving a lithium salt in an organic solvent.

As the organic solvent, any organic solvent may be used as long as it is used in the art. The organic solvent may be, for example, propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran,2-methyltetrahydrofuran, $\gamma$-butyrolactone, dioxolane, 4-methyldioxolane, N,N-dimethylformamide, dimethylacetamide, dimethylsulfoxide, dioxane,1,2-dimethoxyethane, sulfolane, dichloroethane, chlorobenzene, nitrobenzene, diethylene glycol, dimethyl ether, or a mixture thereof.

As the lithium salt, any lithium salt may be used as long as it is used in the art. The lithium salt may be, for example, $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$(1≤x≤20, 1≤y≤20), LiCl, Lil, or a mixture thereof.

Alternatively, the electrolyte may be a solid electrolyte. The solid electrolyte is, for example, boron oxide or lithium oxynitride, but is not limited thereto. Any solid electrolyte may be used as long as it is used in the art. The solid electrolyte may be formed on the anode by a method such as sputtering, or a separate solid electrolyte sheet is laminated on the anode.

The solid electrolyte may be, for example, an oxide-based solid electrolyte or a sulfide-based solid electrolyte.

The solid electrolyte may be, for example, an oxide-based solid electrolyte. The oxide-based solid electrolyte may be one or more selected from $Li_{1+x+y}Al_xTi_{2-x}Si_yP_{3-y}O_{12}$ (0<x<2 and 0≤y<3), $BaTiO_3$, $Pb(Zr,Ti)O_3$ (PZT), $Pb_{1-x}La_xZr_{1-y}Ti_yO_3$ (PLZT) (0≤x<1, 0≤y<1), $PB(Mg_3Nb_{2/3})O_3$-$PbTiO_3$ (PMN-PT), $HfO_2$, $SrTiO_3$, $SnO_2$, $CeO_2$, $Na_2O$, MgO, NiO, CaO, BaO, ZnO, $ZrO_2$, $Y_2O_3$, $Al_2O_3$, $TiO_2$, $SiO_2$, $Li_3PO_4$, $Li_xTi_y(PO_4)_3$ (0<x<2 and 0<y<3), $Li_xAl_yTi_z(PO_4)_3$ (0<x<2, 0<y<1, and 0<z<3), $Li_{1+x+y}(Al, Ga)_x(Ti, Ge)_{2-x}Si_yP_{3-y}O_{12}$ (0≤x≤1 and 0≤y≤1), $Li_xLa_yTiO_3$ (0<x<2 and 0<y<3), $Li_2O$, LiOH, $Li_2CO_3$, $LiAlO_2$, $Li_2O$-$Al_2O_3$-$SiO_2$-$P_2O_5$-$TiO_2$-$GeO_2$, $Li_{3+x}La_3M_2O_{12}$(M = Te, Nb, or Zr, and x is an integer from 1 to 10). The solid electrolyte is manufactured by sintering. For example, the oxide-based solid electrolyte may be a Garnet-type solid electrolyte selected from $Li_7La_3Zr_2O_{12}$(LLZO) and $Li_{3+x}La_3Zr_{2-a}M_aO_{12}$ (M doped LLZO, M=Ga, W, Nb, Ta, or Al, and x is an integer from 1 to 10).

The sulfide-based solid electrolyte may include, for example, lithium sulfide, silicon sulfide, phosphorus sulfide, boron sulfide, or a combination thereof. Sulfide-based solid electrolyte particles may include $Li_2S$, $P_2S_5$, SiS2, GeS2, B2S3, or a combination thereof. The sulfide-based solid electrolyte particles may be $Li_2S$ or $P_2S_5$. It is known that sulfide-based solid electrolyte particles have higher lithium ion conductivity than other inorganic compounds. For example, the sulfide-based solid electrolyte includes $Li_2S$ and $P_2S_5$. When a sulfide solid electrolyte material constituting the sulfide-based solid electrolyte includes $Li_2S$-$P_2S_5$, the mixing molar ratio of $Li_2S$ to $P_2S_5$ may be, for example, in the range of about 50:50 to about 90:10. In an embodiment, an inorganic solid electrolyte which is prepared by adding $Li_3PO_4$, halogen, a halogen compound, $Li_{2+2x}Zn_{1-x}GeO_4$ ("LISICON", $0 \leq x < 1$), $Li_{3+y}PO_{4-x}N_x$ ("LIPON", $0 < x < 4$, $0 < y < 3$), $Li_{3.25}Ge_{0.25}P_{0.75}S_4$ ("ThioLISICON"), $Li_2O$-$Al_2O_3$-$TiO_2$-$P_2O_5$ ("LATP") to the inorganic solid electrolyte of $Li_2S$-$P_2S_5$, $SiS_2$, $GeS_2$, $B_2S_3$, or a combination thereof, may be used as a sulfide solid electrolyte. Non-limiting examples of the sulfide solid electrolyte material include $Li_2S$-$P_2S_5$; $Li_2S$-$P_2S_5$-LiX (X=halogen element); $Li_2S$-$P_2S_5$-$Li_2O$; $Li_2S$-$P_2S_5$-$Li_2O$-LiI; Li2S-SiS2; $Li_2S$-SiS2-LiI; $Li_2S$-SiS2-LiBr; $Li_2S$-SiS2-LiCI; $Li_2S$-$SiS_2$-$B_2S_3$-LiI; $Li_2S$-$SiS_2$-$P_2S_5$-LiI; Li2S-B2S3; $Li_2S$-$P_2S_5$-$Z_mS_n$ ($0 < m < 10$, $0 < n < 10$, Z=Ge, Zn, or Ga); Li2S-GeS2; $Li_2S$-$SiS_2$-$Li_3PO_4$; and $Li_2S$-$SiS_2$-$Li_pMO_q$ ($0 < p < 10$, $0 < q < 10$, M=P, Si, Ge, B, Al, Ga, or In). In this regard, the sulfide solid electrolyte material may be prepared by treating the raw starting material (for example, $Li_2S$, $P_2S_5$, etc.) of the sulfide solid electrolyte material by a melt quenching method, a mechanical milling method, etc. Also, a calcination process may be performed after the treatment. The sulfide-based solid electrolyte may be amorphous, crystalline, or a mixture thereof.

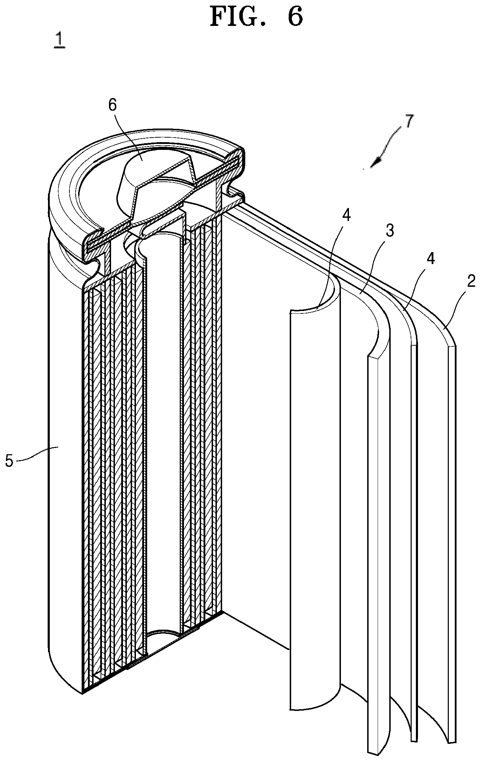

Referring to FIG. 6, a lithium battery 1 according to an embodiment includes a cathode 3, an anode 2, and a separator 4. The cathode 3, the anode 2, and the separator 4 may be wound or folded to form a battery structure 7. The battery structure 7 is accommodated in a battery case 5. An organic electrolyte is injected into the battery case 5, and the battery case 5 is sealed with a cap assembly 6 to complete the lithium battery 1. The battery case 5 is cylindrical, but is not necessarily limited to this shape, and, for example, the shape thereof is a square, a thin film, or the like.

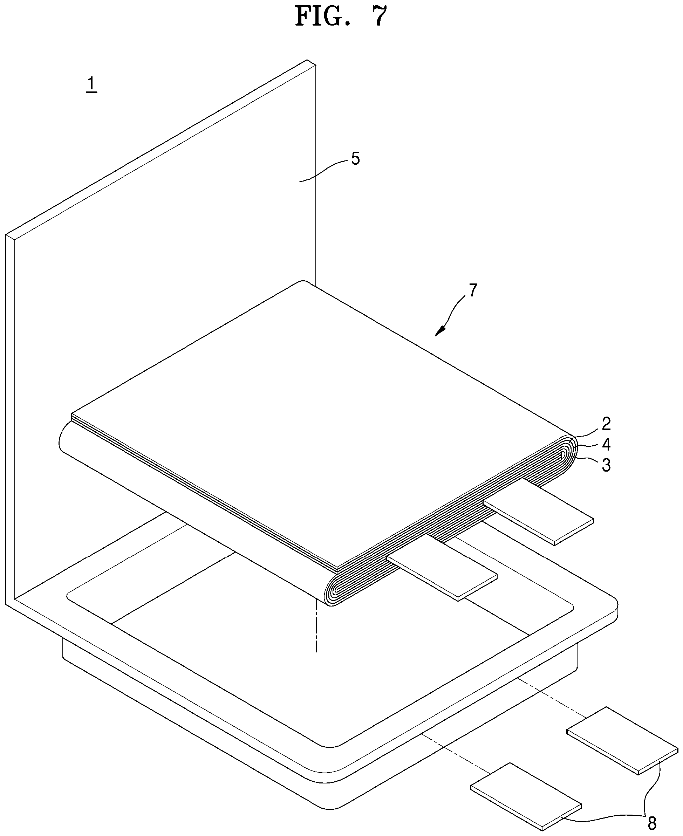

Referring to FIG. 7, a lithium battery 1 according to an embodiment includes a cathode 3, an anode 2, and a separator 4. The separator 4 may be located between the cathode 3 and the anode 2, and the cathode 3, the anode 2, and the separator 4 may be wound or folded to form a battery structure 7. The battery structure 7 is accommodated in a battery case 5. An electrode tab 8 acting as an electrical path for inducing the current formed in the battery structure 7 to the outside may be included. An organic electrolyte is injected into the battery case 5 and sealed to complete the manufacture of the lithium battery 1. The battery case 5 may have a rectangular shape, but is not necessarily limited to such a shape, and may have, for example, a cylindrical shape, a thin film type, or the like.

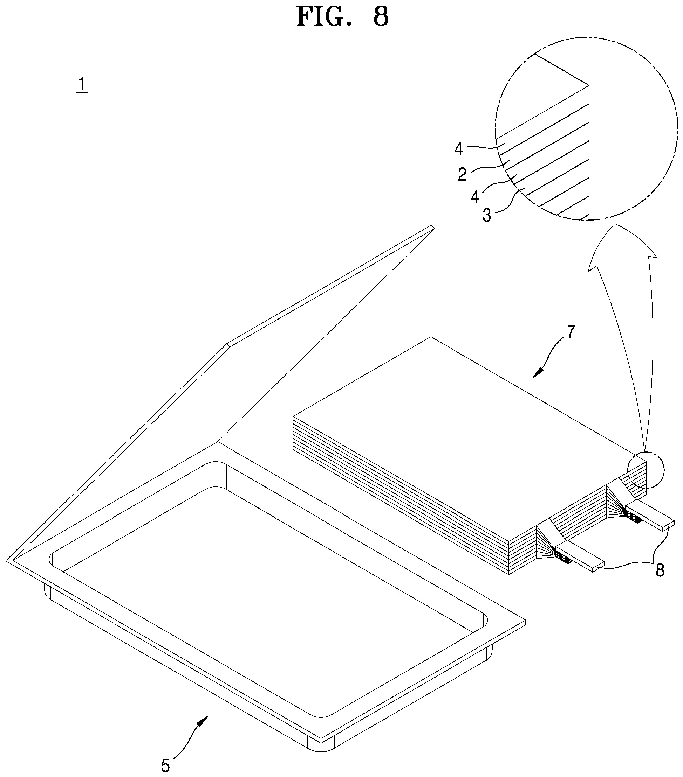

Referring to FIG. 8, a lithium battery 1 according to an embodiment includes a cathode 3, an anode 2, and a separator 4. The separator 4 is located between the cathode 3 and the anode 2 to form a battery structure. The battery structure 7 is stacked in a bi-cell structure, and then accommodated in the battery case 5. An electrode tab 8 acting as an electrical path for inducing the current formed in the battery structure 7 to the outside may be included. An organic electrolyte is injected into the battery case 5 and sealed to complete the manufacture of the lithium battery 1. The battery case 5 may have a rectangular shape, but is not necessarily limited to such a shape, and may have, for example, a cylindrical shape, a thin film type, or the like.

A pouch-type lithium battery corresponds to a case where a pouch is used as a battery case for each of the lithium batteries of FIGS. 6 to 8. A pouch-type lithium battery includes at least one cell structure. A separator is located between a cathode and an anode to form a cell structure. After the cell structure is stacked in a bi-cell structure, it is impregnated with an organic electrolytic solution, and is accommodated and sealed in a pouch to complete a pouch-type lithium battery. For example, although not shown in the drawings, the cathode, the anode, and the separator may be simply stacked and accommodated in the form of an electrode assembly in a pouch. In an embodiment, the cathode, the anode, and the separator may be wound or folded into an electrode assembly in the form of a jelly roll, and then, accommodated in the pouch. Then, an organic electrolyte is injected into the pouch, which was then sealed to complete the manufacture of the lithium battery.

Since the lithium battery has excellent lifetime characteristics and high-rate characteristics, it is used in electric vehicles (EVs). For example, the lithium battery is used in hybrid vehicles such as plug-in hybrid electric vehicles (PHEVs). Further, the lithium battery is used in fields where a large amount of power storage is required. For example, the lithium battery is used in electric bicycles, power tools, and the like.

A plurality of lithium batteries may be stacked to form a battery module, and a plurality of battery modules may form a battery pack. Such a battery pack may be used in any device requiring high capacity and high output. For example, the battery pack may be used in notebooks, smart phones, electric vehicles, and the like. The battery module may include, for example, a plurality of batteries and a frame for holding the same. The battery pack may include, for example, a plurality of battery modules and a bus bar connecting the same. The battery module and/or battery pack may further include a cooling device. A plurality of battery packs may be controlled by a battery management system. The battery management system may include a battery pack and a battery control device connected to the battery pack.

A method of preparing a composite anode active material according to an embodiment includes: providing a silicon-containing anode active material such as a silicon-containing structure, a silicon-containing compound, or a combination thereof; providing a composite; and mechanically milling a silicon-containing structure, a silicon-containing compound, or a combination thereof and a composite, wherein the composite includes at least one first metal oxide represented by Formula $M_aO_b$ ($0 < a \leq 3$, $0 < b < 4$, and when a is 1, 2, or 3, b is not an integer), and a first carbonaceous material, and the first metal oxide is placed within a matrix of first carbonaceous material, and M is at least one metal selected from Group 2 to Group 13, Group 15, and Group 16 of the Periodic Table of Elements.

A silicon-containing anode active material is provided. The silicon-containing anode active material may be, for example, a silicon-containing structure, a silicon-containing compound, or a combination thereof. The silicon-containing structure may be, for example, the silicon composite structure described above. Silicon-containing compounds may be, for example, $SiO_x$ (0<x<2).

The providing the composite includes, for example, supplying a reaction gas including a carbon source gas to a second metal oxide represented by Formula $M_aO_c$ (0<a≤3, 0<c≤4, when a is 1, 2, or 3, c is an integer) and performing heat treatment thereon to form a composite, wherein M is at least one metal selected from Group 2 to Group 13, Group 15, and Group 16 of the Periodic Table of Elements.

The carbon source gas may be a compound represented by Formula 1, or may be at least one mixed gas selected from a compound represented by Formula 1, a compound represented by Formula 2, and an oxygen-containing gas represented by Formula 3.

<Formula 1>           $CnH(2n+2-a)[OH]a$

in Formula 1, n is 1 to 20 and a is 0 or 1;

<Formula 2>           $CnH_{2n}$

in Formula 2, n is 2 to 6; and

<Formula 3>           $C_xH_yO_z$

in Formula 3, x is an integer of 0 or 1 to 20, y is an integer of 0 or 1 to 20, and z is 1 or 2.

The compound represented by Formula 1 and the compound represented by Formula 2 may each be at least one selected from methane, ethylene, propylene, methanol, ethanol, and propanol. The oxygen-containing gas represented by Formula 3 may include, for example, carbon dioxide ($CO_2$), carbon monoxide (CO), water vapor ($H_2O$), or a mixture thereof.

After supplying a reaction gas including a carbon source gas to a second metal oxide represented by $M_aO_c$ (0<a≤3, 0<c≤4, when a is 1, 2, or 3, c is an integer) and performing heat treatment, a cooling process using at least one inert gas selected from nitrogen, helium, and argon may be further performed. The cooling process refers to a process of adjusting temperature to room temperature (about 20 °C to about 25 °C). The carbon source gas may include at least one inert gas selected from nitrogen, helium, and argon.

In the method of manufacturing the composite, a process of growing a carbonaceous material, for example, graphene may be performed under various conditions according to a gas phase reaction.

According to a first condition, for example, first, methane is supplied to a reactor provided with the second metal oxide represented by $M_aO_c$ (0<a≤3, 0<c≤4, when a is 1, 2, or 3, c is an integer), and is heated to heat treatment temperature (T). The heating time up to heat treatment temperature (T) is about 10 minutes to about 4 hours, and the heat treatment temperature (T) is about 700 °C to about 1100 °C. Heat treatment is performed at the heat treatment temperature (T) for reaction time. The reaction time is, for example, about 4 hours to about 8 hours. The resultant product of heat treatment is cooled to room temperature to prepare a composite. The time taken to perform the process of cooling the resultant product from the heat treatment temperature to room temperature is, for example, about 1 hour to 5 hours.

According to a second condition, for example, first, hydrogen is supplied to a reactor provided with the second metal oxide represented by $M_aO_c$ (0<a≤3, 0<c≤4, when a is 1, 2, or 3, c is an integer), and is heated to heat treatment temperature (T). The heating time up to heat treatment temperature (T) is about 10 minutes to about 4 hours, and the heat treatment temperature (T) is about 700 °C to about 1100 °C. After heat treatment is performed at the heat treatment temperature (T) for predetermined reaction time, methane gas is supplied, and heat treatment is performed for residual reaction time. The reaction time is, for example, about 4 hours to about 8 hours. The resultant product of heat treatment is cooled to room temperature to prepare a composite. Nitrogen is supplied during the process of cooling the resultant product. The time taken to perform the process of cooling the resultant product from the heat treatment temperature to room temperature is, for example, about 1 hour to 5 hours.

According to a third condition, for example, first, hydrogen is supplied to a reactor provided with the second metal oxide represented by $M_aO_c$ (0<a≤3, 0<c≤4, when a is 1, 2, or 3, c is an integer), and is heated to heat treatment temperature (T). The heating time up to heat treatment temperature (T) is about 10 minutes to about 4 hours, and the heat treatment temperature (T) is about 700 °C to about 1100 °C. After heat treatment is performed at the heat treatment temperature (T) for predetermined reaction time, a mixed gas of methane and hydrogen is supplied, and heat treatment is performed for residual reaction time. The reaction time is, for example, about 4 hours to about 8 hours. The resultant product of heat treatment is cooled to room temperature to prepare a composite. Nitrogen is supplied during the process of cooling the resultant product. The time taken to perform the process of cooling the resultant product from the heat treatment temperature to room temperature is, for example, about 1 hour to 5 hours.

In the process of preparing the composite, when the carbon source gas includes water vapor, a composite having very excellent conductivity may be obtained. The amount of water vapor in the gas mixture is not limited, and is, for example, about 0.01 vol% to about 10 vol% based on 100 vol% of the total carbon source gas. The carbon source gas may be, for example, methane; a mixed gas containing methane and an inert gas; or a mixed gas containing methane and an oxygen-containing gas.

The carbon source gas may be, for example, methane; a mixed gas of methane and carbon dioxide; or a mixed gas of methane, carbon dioxide and water vapor. The molar ratio of methane and carbon dioxide in the mixed gas of methane and carbon dioxide may be about 1:0.20 to about 1:0.50, about 1:0.25 to about 1:0.45, or about 1:0.30 to about 1:0.40. In a gas mixture of methane, carbon dioxide and water vapor, the molar ratio of methane, carbon dioxide, and water vapor may be about 1:0.20 to 0.50:0.01 to 1.45, about 1:0.25 to 0.45:0.10 to 1.35, or about 1:0.30 to 0.40:0.50 to 1.0.

The carbon source gas may be, for example, carbon monoxide or carbon dioxide. The carbon source gas is, for example, a mixed gas of methane and nitrogen. In the mixed gas of methane and nitrogen, the molar ratio of methane and nitrogen may be about 1:0.20 to 1:0.50, about 1:0.25 to 1:0.45, and about 1:0.30 to 1:0.40. The carbon source gas may not include an inert gas such as nitrogen.

The heat treatment pressure may be selected in consideration of the heat treatment temperature, the composition of the gas mixture, and the desired coating amount of carbon. The heat treatment pressure may be controlled by adjusting the amount of the inflowing gas mixture and the amount of the outflowing gas mixture. The heat treatment pressure is, for example, 0.5 atm or more, 1 atm or more, 2 atm or more, 3 atm or more, 4 atm or more, or 5 atm or more.

The heat treatment time may be selected in consideration of the heat treatment temperature, the heat treatment pressure, the composition of the gas mixture, and the desired coating amount of carbon. For example, the reaction time at the heat treatment temperature may be, for example, about 10 minutes to about 100 hours, about 30 minutes to about 90 hours, or about 50 minutes to about 40 hours. For example, as the heat treatment time increases, the amount of deposited carbon, for example, graphene (carbon), is increased, and thus the electrical properties of the composite may be improved. However, this tendency may not necessarily be proportional to time. For example, after a predetermined time has elapsed, carbon deposition, for example, graphene deposition, may no longer occur or the deposition rate may be low.

Through the gas phase reaction of the carbon source gas, even at a low temperature, a composite may be obtained by coating a uniform carbonaceous material, for example, graphene on at least one selected from a second metal oxide represented by $M_aO_c$ (0<a≤3, 0<c≤4, and when a is 1, 2, or 3, c is an integer) and a reduction product thereof, that is, a first metal oxide represented by $M_aO_b$ (0<a≤3, 0<b<4, and when a is 1, 2, or 3, and b is not an integer).

The composite includes: a carbonaceous material matrix having at least one structure selected from a spherical structure, a spiral structure in which a plurality of spherical structures are connected to each other, a cluster structure in which a plurality of spherical structures are aggregated with each other, and a sponge structure, for example, a graphene matrix; and at least one selected from a first metal oxide represented by $M_aO_b$ (0<a≤3, 0<b<4, and when a is 1, 2, or 3, and b is not an integer) and a second metal oxide represented by $M_aO_c$ (0<a≤3, 0<c≤4, and when a is 1, 2, or 3, c is an integer), which is placed in the carbonaceous material matrix.

Next, a silicon-containing structure, a silicon-containing compound, or a combination thereof and the composite are mechanically milled. In the mechanically milling, the milling method is not particularly limited, and any method of the related art in which a silicon-containing structure, a silicon-containing compound, or a combination thereof is brought into contact with a composite and the resultant is pressed, can be used herein. A Nobilta mixer may be used in the milling. The number of rotations of the mixer at the time of milling may be, for example, 2000 rpm or more, or 3000 rpm or more. The number of rotations of the mixer at the time of milling may be, for example, 4000 rpm or less. The number of rotations of the mixer at the time of milling may be, for example, from about 2000 rpm to about 4000 rpm, or from about 3000 rpm to about 4000 rpm.

When the milling speed is too low, the shear force applied to the silicon-containing structure, a silicon-containing compound, or a combination thereof and the composite is weak, so that it is difficult to make the silicon-containing structure, the silicon-containing compound, or a combination thereof, and the composite in the form of a composite. When the milling speed is too high, the composite may be formed for too short time, so that it is difficult to uniformly coat the composite on the silicon-containing structure and/or the silicon-containing compound to form a uniform and continuous shell. The milling time may be, for example, about 5 minutes to about 100 minutes, about 5 minutes to about 60 minutes, or about 5 minutes to about 30 minutes. When the milling time is too short, it is difficult to uniformly coat the composite on the silicon-containing structure and/or the silicon-containing compound to form a uniform and continuous shell. When the milling time is too long, production efficiency may be lowered. The amount of the composite may be 5 wt% or less, 4 wt% or less, 3 wt% or less, 2 wt% or less, or 1 wt% or less, based on the total weight of the silicon-containing anode active material and the composite. The amount of the composite may be, for example, about 0.01 to about 5 wt%, about 0.01 to about 4 wt%, about 0.01 to about 3 wt%, about 0.1 to about 2 wt%, or about 0.1 to about 1 wt%, based on the total weight of the silicon-containing anode active material and the composite. For example, the amount of the composite may be about 0.01 parts by weight to about 5 parts by weight, about 0.01 parts by weight to about 4 parts by weight, about 0.01 parts by weight to about 3 parts by weight, about 0.1 parts by weight to about 3 parts by weight, about 0.1 parts by weight to about 2 parts by weight, or about 0.1 parts by weight to about 1 part by weight, based on the total weight of the silicon-containing anode active material and the composite. The average particle diameter (D50) of the composite used for mechanical milling of the silicon-containing anode active material and the composite may be, for example, about 50 nm to about 200 nm, about 100 nm to about 300 nm, or about 200 nm to about 500 nm.

The disclosure will be described in more detail through the following examples and comparative examples. However, these examples are only for illustrative purposes, and the scope of the disclosure is not limited thereto.

(Preparation of composite)

Preparation Example 1: $Al_2O_3$@Gr composite

$Al_2O_3$ particles (average particle diameter: about 20 nm) were placed in a reactor, and then, $CH_4$ was supplied into the reactor at about 300 sccm and 1 atm for about 30 minutes, and the temperature inside the reactor was raised up to 1000 °C at a temperature increase rate of about 23°C/min.

Then, the heat treatment was performed by maintaining the temperature for 7 hours. Then, the supply of $CH_4$ was stopped and the temperature inside the reactor was adjusted to room temperature (25°C) to obtain a composite in which $Al_2O_3$ particles and $Al_2O_z$ (0<z<3) particles as a reduction product thereof were embedded in graphene.

The amount of alumina contained in the composite was 60 wt%.

Preparation Example 2: $Al_2O_3$@Gr composite

A composite was prepared in the same manner as in Preparation Example 1, except that $Al_2O_3$ particles (average particle diameter: about 200 nm) were used instead of $Al_2O_3$ particles (average particle diameter: about 20 nm).

Comparative Preparation Example 1: $SiO_2$@Gr composite

$SiO_2$ particles (average particle diameter: about 15 nm) were placed in the reactor, and then, $CH_4$ was supplied into the reactor at about 300 sccm and 1 atm for about 30 minutes, and the temperature inside the reactor was raised up to 1000 °C at a temperature increase rate of about 23°C/min.

Then, the heat treatment was performed by maintaining the temperature for 7 hours. Then, the supply of $CH_4$ was stopped and the temperature inside the reactor was adjusted to room temperature (25°C) to obtain a composite in which $SiO_2$ particles and $SiO_y$ (0<y<2) particles as a reduction product thereof were embedded in graphene.

(Manufacture of silicon-based anode active material)

Preparation Example 3: Silicon composite structure

Needle-shaped silicon was pulverized to obtain plate-shaped and needle-shaped silicon particles with a length of about 125 nm and a thickness of about 40 nm having the surface on which about 0.1 nm thick silicon suboxide ($SiO_x$, 0<x<2) was formed.

A composition including 30 parts by weight of plate-shaped and needle-shaped silicon particles, 10 parts by weight of stearic acid, and 60 parts by weight of isopropyl alcohol was prepared. The prepared composition was spray-dried and dried to obtain porous silicon secondary particles having an average particle diameter of about 5 $\mu$m.

Spray drying was performed using a spray dryer (Micro Mist Spray Dryers, Fujisaki electric). In a nitrogen atmosphere, the spray nozzle size was about 5 $\mu$m, the pressure during spray drying was about 0.4 MPa, and the powder spraying atmosphere temperature was about 200 °C. The prepared composition was sprayed under these spray-drying conditions to remove isopropyl alcohol, thereby obtaining porous silicon secondary particles.

The prepared porous silicon secondary particles were placed in a reactor. Under the condition that $CH_4$ was supplied into the reactor at about 300 sccm and 1 atm, the temperature inside the reactor was raised up to 1000 °C at a temperature increase rate of about 23 °C/min.

Then, the heat treatment was performed by maintaining the temperature for 5 hours. Then, the supply of $CH_4$ was stopped and the internal temperature of the reactor was adjusted to room temperature (25 °C) to obtain a porous silicon composite structure.

The porous silicon composite structure included porous silicon secondary particles and highly crystalline first graphene flakes located on the porous silicon secondary particles, wherein the porous silicon secondary particles included an aggregate of two or more silicon composite primary particles, and the silicon composite primary particles included silicon and silicon suboxide ($SiO_x$, $0<x<2$) located on the silicon and a second graphene flake located on the silicon suboxide.

The amount of the first graphene flake and the second graphene flake in the silicon-containing composite structure was about 25 parts by weight based on 100 parts by weight of the total weight of the porous silicon composite. The silicon-containing composite structure was porous.

Preparation Example 4: Silicon composite structure + amorphous carbon coating layer

60 parts by weight of the silicon-containing composite structure prepared according to Preparation Example 3, 40 parts by weight of coal tar pitch, and 10 parts by weight of N-methylpyrrolidone were added to a planetary mixer, and a mixing process was performed.

The coal tar pitch was infiltrated between the pores of the porous silicon secondary particles included in the silicon composite structure by the mixing process. The mixing process for the infiltration of coal tar pitch was carried out for a total of 15 minutes each for 5 minutes in the order of stirring-defoaming-stirring, and the cycle of stirring-defoaming-stirring was determined as one cycle, and a total of 4 cycles were performed. In the stirring, the revolution speed was 1000 rpm, the rotation speed was 1000 rpm, and in the defoaming, the revolution speed was 2000 rpm, the rotation speed was 64 rpm, and 40 parts by weight of the coal tar pitch was divided into 4 portions, and each portion was added to each cycle. The mixing temperature was controlled to be about 70 °C. The mixing result was heat-treated in a nitrogen gas atmosphere at about 1,000 °C for 4 hours.

As a result, a silicon composite structure was prepared in which a carbonaceous coating film containing a first amorphous carbon was disposed on the surface of the silicon composite structure, and a second amorphous carbon was disposed in an inner portion the silicon composite structure. The second amorphous carbon is located in the pores of the porous silicon secondary particles included in the silicon composite structure. The weight ratio of first amorphous carbon to second amorphous carbon was 1:2. The weight ratio of carbon in graphene flakes to amorphous carbon in the prepared silicon composite structure was 2:8. The graphene flake is a combination of both the first graphene flake and the second graphene flake. The amorphous carbon is a combination of both the first amorphous carbon and the second amorphous carbon.

(Manufacture of composite anode active material)

Example 1: 1 wt% $Al_2O_3$@Gr composite (alumina 0.6 wt%)-coated silicon composite structure

The silicon composite structure prepared according to Preparation Example 3 and the composite prepared according to Preparation Example 1 were milled using a Nobilta Mixer (Nobilta Mixer, Hosokawa, Japan) at a rotation speed of about 2000 rpm to about 4000 rpm for about 5 minutes to 30 minutes to obtain a composite anode active material. The composite anode active material had a structure in which a shell including a composite and/or a milling result thereof was coated on a silicon-based anode active material core.

The mixing weight ratio of the silicon composite structure obtained according to Preparation Example 3 and the composite obtained according to Preparation Example 1 was 99:1.

Example 2: 0.1 wt% $Al_2O_3$@Gr composite-coated silicon composite structure

A composite anode active material was prepared in the same manner as in Example 1, except that the weight ratio of the silicon composite structure obtained according to Preparation Example 3 and the composite obtained according to Preparation Example 1 was changed to 99.9:0.1.

Example 3: 0.5 wt% $Al_2O_3$@Gr composite-coated silicon composite structure

A composite anode active material was prepared in the same manner as in Example 1, except that the weight ratio of the silicon composite structure obtained according to Preparation Example 3 and the composite obtained according to Preparation Example 1 was changed to 99.5:0.5.

Example 4: 5 wt% $Al_2O_3$@Gr composite-coated silicon composite structure

A composite anode active material was prepared in the same manner as in Example 1, except that the weight ratio of the silicon composite structure obtained according to Preparation Example 3 and the composite obtained according to Preparation Example 1 was changed to 95:5.

Example 5: 1 wt% Al$_2$O$_3$@Gr composite + 0.1 wt% CNT-coated silicon composite structure

A composite anode active material was prepared in the same manner as in Example 1, except that the weight ratio of the silicon composite structure obtained according to Preparation Example 3, the composite obtained according to Preparation Example 1, and carbon nanotubes (CNT) was changed to 98.9:1.0:0.1.
In addition to the silicon composite structure obtained according to Preparation Example 3 and the composite obtained according to Preparation Example 1, carbon nanotubes (CNT) were additionally used.
The length of the CNT was 200 nm to 300 nm, and the diameter of the carbon nanotube was about 10 nm.

Example 6: 1 wt% Al$_2$O$_3$@Gr composite -coated silicon composite structure, 200 nm of alumina particle diameter

A composite anode active material was prepared in the same manner as in Example 1, except that the composite obtained according to Preparation Example 2 was used instead of the composite obtained according to Preparation Example 1.

Example 7: 1 wt% Al$_2$O$_3$@Gr composite-coated [amorphous carbon-coated silicon composite structure]

A composite anode active material was prepared in the same manner as in Example 1, except that the amorphous carbon-coated silicon composite structure obtained according to Preparation Example 4 was used instead of the silicon composite structure obtained according to Preparation Example 3.

Example 8: 1 wt% Al$_2$O$_3$@Gr composite-coated SiO$_x$

A composite anode active material was prepared in the same manner as in Example 1, except that, as a silicon-based anode active material, SiO$_x$ (0<x<2) having an average particle diameter of 6 $\mu$m was used instead of the silicon composite structure obtained according to Preparation Example 3.

Comparative Example 1: Bare silicon composite structure

The silicon composite structure prepared according to Preparation Example 3 was used as it is as an anode active material.

Comparative Example 2: 1 wt% [Al$_2$O$_3$+graphene(Gr)] mixture-coated silicon composite structure

A composite anode active material was prepared in the same manner as in Example 1, except that a simple mixture of Al$_2$O$_3$ particles (average particle diameter: about 20 nm) and graphene in a weight ratio of 60:40 was used instead of the composite prepared according to Preparation Example 1.

Comparative Example 3: Simple mixture of Al$_2$O$_3$@Gr and silicon composite structure

A simple mixture of the silicon composite structure prepared according to Preparation Example 3 and the composite prepared according to Preparation Example 1 in a weight ratio of 99:1 was used as the anode active material.

Comparative Example 4: 1 wt% SiO$_2$@Gr composite -coated silicon composite structure

A composite anode active material was prepared in the same manner as in Example 1, except that the composite obtained in Comparative Preparation Example 1 was used instead of the composite prepared according to Preparation Example 1.

Comparative Example 5: Bare SiO$_x$

SiO$_x$ (0<x<2) with an average particle diameter of 6 $\mu$m was used as it is as an anode active material.

(Manufacture of a lithium battery (full cell), wet anode)

Example 9

(Production of anode)

A slurry was prepared by mixing the composite anode active material prepared according to Example 1, graphite, CMC/SBR binder (1:1 weight ratio mixture) and deionized water. The mixing ratio of: the mixture of the composite anode active material and graphite; and the solid content of CMC/SBR binder was 97.5:2.5 weight ratio. The weight ratio of the composite anode active material and the graphite in the mixture of the composite anode active material and graphite prepared according to Example 1 was 2:98.

The slurry was bar-coated to a thickness of 100 $\mu$m on a copper foil current collector, dried at room temperature, vacuum dried again under vacuum condition at 120 °C, and roll-pressed to prepare an anode.

(Manufacture of cathode)

A mixture in which $LiNi_{0.91}Co_{0.05}Al_{0.04}O_2$ (hereinafter referred to as NCA91) composite cathode active material, a carbon conductive material (Denka Black), and polyvinylidene fluoride (PVdF) were mixed in a weight ratio of 96:2:2, was mixed with N-methylpyrrolidone (NMP) in an agate mortar to prepare slurry.

The slurry was bar-coated to a thickness of 40 $\mu$m on an aluminium current collector, dried at room temperature, dried again under a vacuum condition at 120 °C, and roll-pressed to prepare a positive electrode.

(Manufacture of coin cells)

Coin cells were manufactured using the cathodes and the anodes, which were prepared as described above, a polypropylene separator (Celgard 3510), and, as an electrolyte, a solution of 1.15M $LiPF_6$ and 1.5 wt% of vinylene carbonate (VC) dissolved in ethylene carbonate (EC) + ethylmethyl carbonate (EMC) + dimethyl carbonate (DMC) (a volume ratio of 2:4:4).

Examples 10 to 16

Coin cells were manufactured in the same manner as in Example 9, except that each of the composite anode active materials prepared according to Examples 2 to 8 was used instead of the composite anode active material prepared according to Example 1.

Comparative Examples 6 to 10

Coin cells were manufactured in the same manner as in Example 9, except that each of the anode active materials prepared according to Comparative Examples 1 to 5 was instead of the composite anode active material prepared according to Example 1.

(Manufacture of a lithium battery (full cell), dry anode)

Example 17

(Production of anode)

The composite anode active material prepared according to Example 1, which is the dry first anode active material, graphite, which is the dry second anode active material, carbon conductive material (Denka Black), which is the dry conductive material, and polytetrafluoroethylene (PTFE), which is the dry binder, were added into a blade mixer in a weight ratio of 1.8:90.2:4:4, and then, a first dry mixing was performed at 25 °C at a speed of 1000 rpm for 10 minutes to prepare a first mixture in which the first anode active material, the second anode active material, the conductive material, and the binder were uniformly mixed.

Then, in order to allow the binder to be fibrillated, the first mixture was subjected to a secondary mixing at 25 °C at a speed of 1000 rpm for 10 minutes to prepare a second mixture. A separate solvent was not used in the preparation of the first mixture and the second mixture.

The prepared second mixture was put into an extruder and extruded to prepare a self-standing film of the anode active material layer in the form of a sheet. The pressure at the time of extrusion was 50 MPa.

A carbon layer, which is an interlayer, was located on one surface of a 12 μm-thick copper thin film to prepare a first laminate in which an interlayer was located on one surface of a second cathode current collector.

The interlayer was prepared by coating a composition including a carbon conductive material (Denka black) and polyvinylidene fluoride (PVDF) on an aluminium thin film and then drying. The thickness of the interlayer located on one surface of the aluminium thin film was about 1 μm.

An anode active material layer self-standing film was placed on the interlayer of the prepared first laminate and roll-pressed to prepare an anode.

(Manufacture of cathode)

A mixture in which $LiNi_{0.91}Co_{0.05}Al_{0.04}O_2$ (hereinafter referred to as NCA91) composite cathode active material, a carbon conductive material (Denka Black), and polyvinylidene fluoride (PVdF) were mixed in a weight ratio of 96:2:2, was mixed with N-methylpyrrolidone (NMP) in an agate mortar to prepare slurry.

The slurry was bar-coated to a thickness of 40 μm on an aluminium current collector, dried at room temperature, dried again under a vacuum condition at 120 °C, and roll-pressed to prepare a positive electrode.

(Manufacture of coin cell)

Coin cells were manufactured using the cathodes and the anodes, which were prepared as described above, a polypropylene separator (Celgard 3510), and, as an electrolyte, a solution of 1.15M $LiPF_6$ and 1.5 wt% of vinylene carbonate (VC) dissolved in ethylene carbonate (EC) + ethylmethyl carbonate (EMC) + dimethyl carbonate (DMC) (a volume ratio of 2:4:4).

Comparative Example 11

A coin cell was manufactured in the same manner as in Example 17, except that the anode active material prepared according to Comparative Example 1 was used instead of the composite anode active material prepared according to Example 1 as the dry first anode active material.

Evaluation Example 1: Evaluation of specific surface area and particle diameter

The specific surface area and the particle diameter of each of the silicon composite structures prepared according to Preparation Example 3, the composite anode active material prepared according to Example 1, and $SiO_x$ (0<x<1) prepared according to Comparative Example 5, and the composite anode active material prepared according to Example 8 were measured. Results thereof are shown in Table 1.

The specific surface area was measured by a nitrogen adsorption method. The particle diameter was measured using a laser scattering particle size distribution meter.

[Table 1]

|  | Specific surface area [m²/g] | D10 [μm] | D50 [μm] | D90 [μm] |
|---|---|---|---|---|
| Preparation Example 3 | 4.5 | 4.7 | 9.5 | 16.8 |
| Example 1 | 7.0 | 3.5 | 8.6 | 16.1 |
| Comparative Example 5 | 6.0 | 4.1 | 6.1 | 9.0 |
| Example 8 | 8.0 | 3.1 | 5.9 | 10.1 |

As shown in Table 1, the composite anode active material prepared according to Example 1 had a smaller specific surface area and smaller D10, D50, and D90 particle diameters than the silicon composite structure prepared according to Preparation Example 3.

In addition, the composite anode active material prepared according to Example 8 a smaller specific surface area and smaller D10, D50, and D90 particle diameters than $SiO_x$ (0<x<2) prepared according to Comparative Example 1.

Evaluation Example 2: XPS spectrum evaluation (I)

In the process of preparing the composite prepared according to Preparation Example 1, XPS spectra were measured using Quantum 2000 (Physical Electronics) over time. Before heating, XPS spectra of C 1s orbitals and Al 2p orbitals of samples were measured after 1 minute, after 5 minutes, after 30 minutes, after 1 hour, and after 4 hours, respectively. At the initial heating, only the peak for the Al 2p orbital appeared, and the peak for the C 1s orbital did not appear. After 30 minutes, the peak for the C 1s orbital appeared clearly, and the size of the peak for the Al 2p orbital was significantly reduced.

After 30 minutes, near 284.5 eV, peaks for C-C bonds due to graphene growth and C 1s orbitals due to C=C bonds appeared clearly.

As reaction time elapsed, the oxidation number of aluminium decreased, and thus the peak position of the Al 2p orbital was shifted toward a lower binding energy (eV).

Accordingly, it was found that, as the reaction proceeded, graphene was grown on $Al_2O_3$ particles, and $Al_2O_x$ (0<x<3), which is a reduction product of $Al_2O_3$, was produced.

The average amounts of carbon and aluminium were measured through XPS analysis results in 10 regions of the composite sample prepared according to Preparation Example 1. With respect to the measurement results, a deviation of the aluminium amount for each region was calculated. The deviation of the aluminium amount was expressed as a percentage of the average value, and this percentage was referred to as uniformity. The percentage of the average value of the deviation of the aluminium content, that is, the uniformity of the aluminium amount was 1 %. Therefore, it was found that alumina was uniformly distributed in the composite prepared according to Preparation Example 1.

Evaluation Example 3: XPS spectrum evaluation (II)

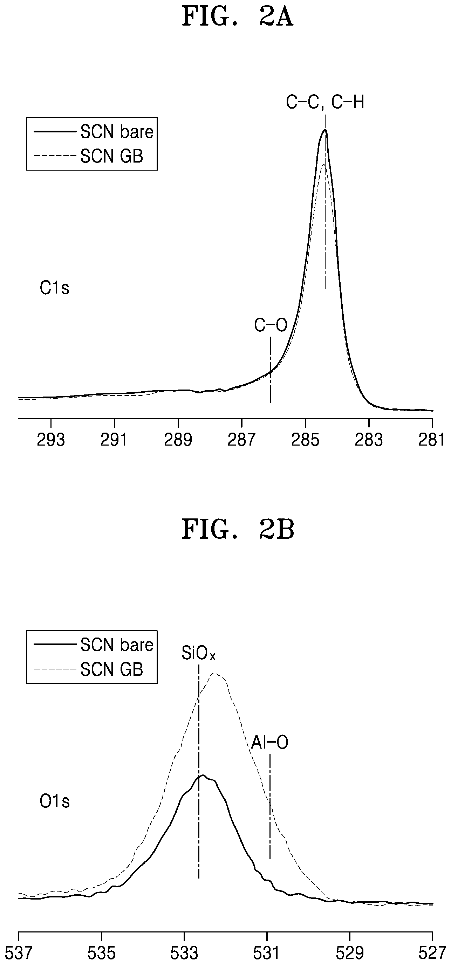

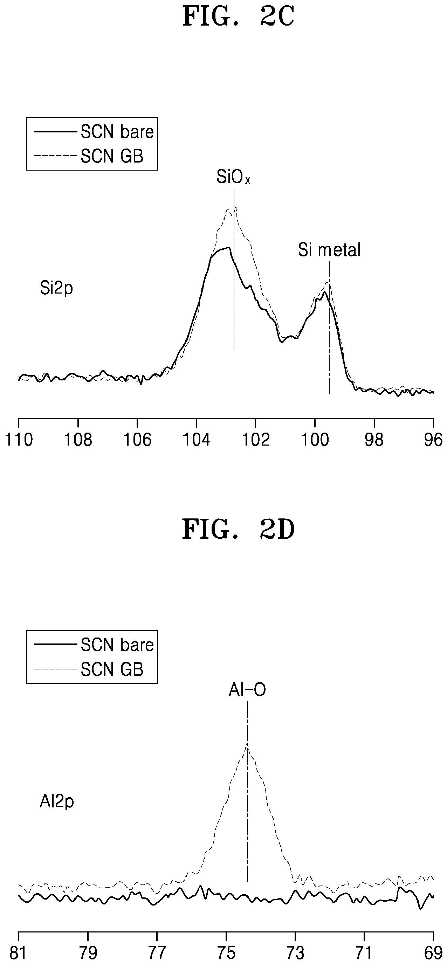

XPS spectra of the silicon composite structure prepared according to Preparation Example 3, the composite anode active material prepared according to Example 1 ($Al_2O_3$@Gr composite-coated silicon composite structure), and $SiO_x$ (0<x<2) prepared according to Comparative Example 5, and the composite anode active material prepared according to Example 8 ($Al_2O_3$@Gr composite-coated $SiO_x$ (0<x<2)) are shown in FIGS. 2A to 3D.

As shown in FIGS. 2A to 2D, compared to the silicon composite structure prepared according to Preparation Example 3, in the case of the composite anode active material prepared according to Example 1, the size of the carbon peak was partially decreased, the size of the oxygen peak was increased, and the size of the silicon peak was partially increased, and the size of the aluminium peak was increased significantly. Therefore, it was confirmed that the composite including aluminium and oxygen was coated on the surface of the silicon composite structure.

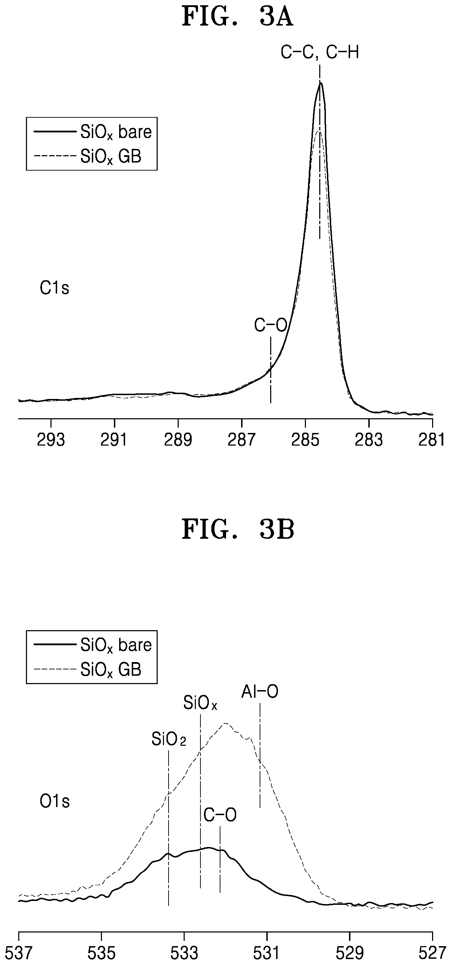

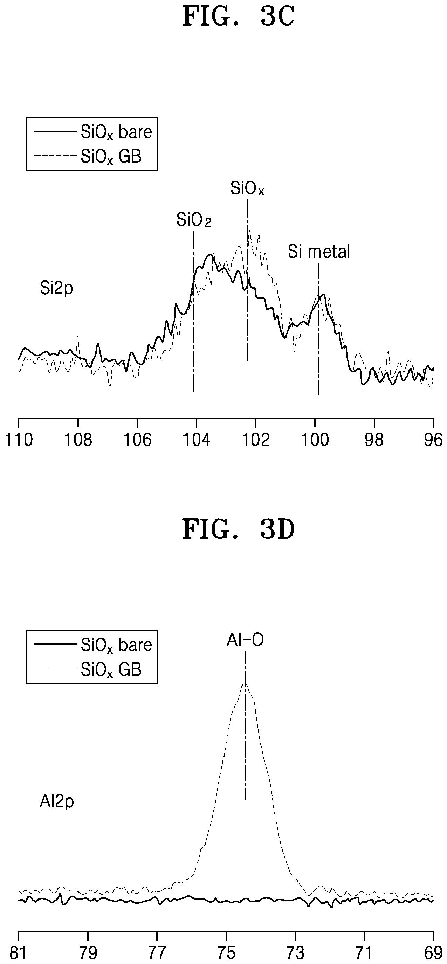

As shown in FIGS. 3A to 3D, compared to $SiO_x$ (0<x<2) prepared according to Comparative Example 5, in the case of the composite anode active material prepared according to Example 8, the size of the carbon peak was partially decreased, the size of the oxygen peak was increased, and the size of the silicon peak was partially increased, and the size of the aluminium peak was increased significantly. Therefore, it was confirmed that the composite including aluminium and oxygen was coated on the surface of the silicon composite structure.

The amounts of elements obtained from the XPS spectra of the silicon composite structure prepared according to Preparation Example 3, the composite anode active material prepared according to Example 1, $SiO_x$ (0<x<2) prepared according to Comparative Example 5, and the composite anode active material prepared according to Example 8 are shown in Table 2.

[Table 2]

|  | Preparation Example 3 [at%] | Example 1 [at%] | Comparative Example 5 [at%] | Example 8 [at%] |
|---|---|---|---|---|
| C 1s | 90.7 | 82.6 | 95.8 | 84.2 |
| O 1s | 5.3 | 12.0 | 3.1 | 11.3 |
| Si 2p | 4.0 | 4.2 | 1.1 | 1.2 |
| Al 2p | 0.0 | 1.2 | 0.0 | 3.3 |

As shown in Table 2, the silicon composite structure prepared according to Preparation Example 3 and $SiO_x$ prepared according to Comparative Example 5 did not contain an aluminium (Al) element.

In contrast, in Examples 1 and 8, the amount of aluminium (Al) element of the composite anode active material was 1.2 at% and 3.3 at%, respectively.

Evaluation Example 4: SEM, HR-TEM and SEM-EDS analysis

The composite anode active material prepared according to Example 1 ($Al_2O_3$@Gr composite-coated silicon composite structure) and the composite anode active material prepared according to Example 8 ($Al_2O_3$@Gr composite-coated $SiO_x$ (0<x<2)) were analyzed using a scanning electron microscope (SEM), a high-resolution transmission electron microscope, and SEM-energy-dispersive X-ray spectroscopy (EDS). For SEM-EDS analysis, Philips' FEI Titan 80-300 was used.

The composite prepared according to Preparation Example 1 shows a structure in which $Al_2O_3$ particles and $Al_2O_z$ ($0<z<3$) particles, which are reduction products thereof, are embedded in graphene. It was found that a graphene layer was located on the outside of one or more particles selected from $Al_2O_3$ particles and $Al_2O_z$ ($0<z<3$). One or more particles selected from $Al_2O_3$ particles and $Al_2O_z$ ($0<z<3$) were uniformly distributed. At least one of $Al_2O_3$ particles and $Al_2O_z$ ($0<z<3$) has a particle diameter of about 20 nm. The particle diameter of the composite prepared according to Preparation Example 1 was about 50 nm to about 200 nm.

It was confirmed that, in the composite anode active materials prepared according to Example 1 and Example 8, the shell formed by the composite including graphene was arranged on the silicon composite structure core or the $SiO_x$ ($0<x<2$) core.

The SEM-EDS mapping analysis was performed on the composite anode active materials prepared according to Examples 1 and 8.

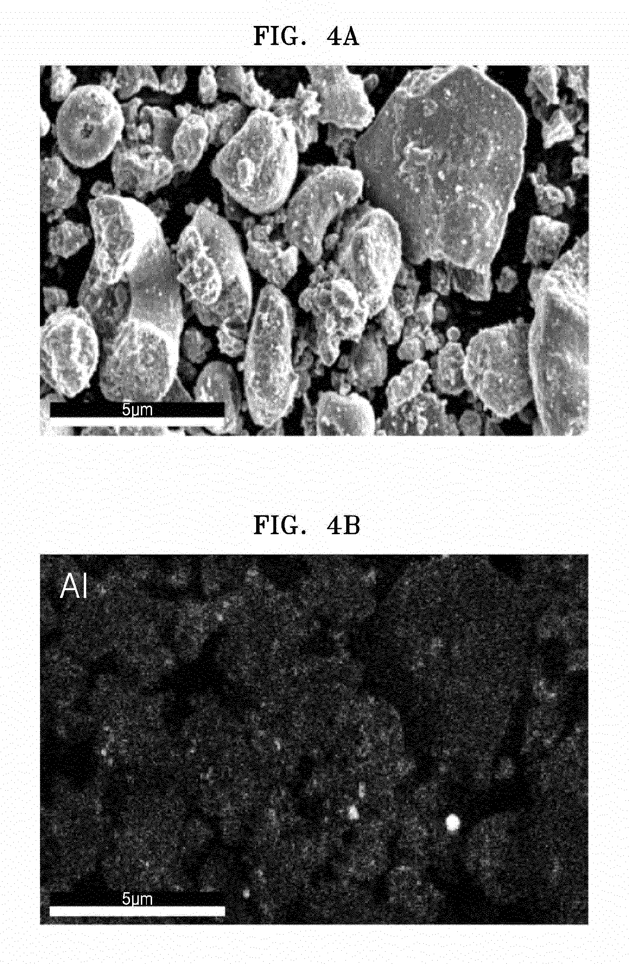

FIG. 4A shows an SEM image of the composite anode active material of Example 1. FIG. 4B shows an SEM-EDS mapping image of the composite anode active material of Example 1.

As shown in FIG. 4B, it was confirmed that aluminium (Al) was distributed on the surface of the composite anode active material of Example 1.

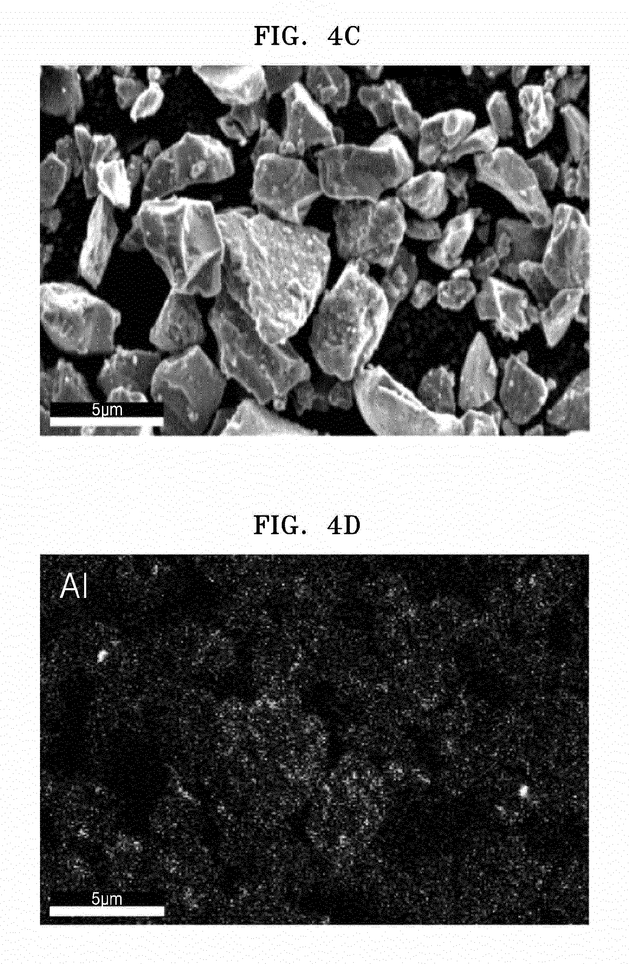

FIG. 4C shows an SEM image of the composite anode active material of Example 8. FIG. 3D shows a SEM-EDS mapping image of the composite anode active material of Example 8.

As shown in FIG. 4D, it was confirmed that aluminium (Al) was distributed on the surface of the composite anode active material of Example 8.

It was confirmed that, in the composite anode active materials prepared according to Examples 1 and 8, the composite prepared according to Preparation Example 1 was uniformly coated on the silicon composite structure core or the $SiO_x$ ($0<x<2$) core to form a shell.

Evaluation Example 5: Charge/Discharge Characteristics Test at Room Temperature (25 °C)

Each of the lithium batteries manufactured in Examples 9 to 16 and Comparative Examples 6 to 10 was charged with a constant current of 0.1 C rate at 25 °C until a voltage reached 4.5 V (vs. Li), and was then cut-off at a current of 0.02 C rate while maintaining the voltage at 4.5 V in a constant voltage mode. Subsequently, each of the lithium batteries was discharged at a constant current of 0.1 C rate until the voltage reached 2.75 V (vs. Li) (formation cycle).

Each of the lithium batteries having undergone the formation cycle was charged with a constant current of 0.2 C rate at 25 °C until a voltage reached 4.5 V (vs. Li), and was then cut-off at a current of 0.02 C rate while maintaining the voltage at 4.5 V in a constant voltage mode. Subsequently, each of the lithium batteries was discharged at a constant current of 0.2 C rate until the voltage reached 2.75 V (vs. Li) (1st cycle). This cycle was repeated (repeat 50 times) under the same conditions until the 50th cycle.

In all charge/discharge cycles, a 10-minute stop time was provided after every charge/discharge cycle. Some of the results of the charging and discharging experiments at room temperature are shown in Table 3 below. The initial efficiency is defined by Equation 1 below, and the capacity retention ratio is defined by Equation 2.

<Equation 1>

Initial efficiency [%] = [Discharge capacity in the formation cycle/Charge capacity in the formation cycle] x 100

<Equation 2>

Capacity retention ratio [%] = [discharge capacity in 50th cycle / discharge capacity in 1st cycle] × 100

[Table 3]

| | Capacity retention ratio [%] |
|---|---|
| Example 9: Al$_2$O$_3$@Gr 1wt% coating/silicon composite structure | 96.0 |
| Example 10: Al$_2$O$_3$@Gr 0.1wt% coating/silicon composite structure | 92.5 |
| Example 11: Al$_2$O$_3$@Gr 0.5wt% coating/silicon composite structure | 95.0 |
| Example 12: Al$_2$O$_3$@Gr 5wt% coating/silicon composite structure | 93.5 |
| Example 13: Al$_2$O$_3$@Gr 1wt% + CNT 0.1wt% coating/silicon composite structure | 95.0 |
| Example 14: Al$_2$O$_3$@Gr 1wt% coating/silicon composite structure, 200 nm Al$_2$O$_3$ | 94.2 |
| Example 15: Al$_2$O$_3$@Gr 1wt% coating/silicon composite structure (amorphous carbon coating) | 95.5 |
| Example 16: Al$_2$O$_3$@Gr 1wt% coating/SiO$_x$ core | 95.8 |
| Comparative Example 6: Bare silicon composite structure (No coating) | 90.0 |
| Comparative Example 7: 1 wt% [Al$_2$O$_3$+graphene (Gr)] mixture-coated silicon composite structure | 90.1 |
| Comparative Example 8: Simple mixture of Al$_2$O$_3$@Gr and silicon composite structure | 92.5 |
| Comparative Example 9: 1 wt% SiO$_2$@Gr composite-coated silicon composite structure | 95.8 |
| Comparative Example 10: Bare SiO$_x$ (no coating) | 89.5 |

As shown in Table 3, the lithium batteries of Examples 9 to 16 had improved lifespan characteristics compared to the lithium batteries of Comparative Examples 1 to 5.

It was determined that the improved lifespan property was because the formation of a solid electrolyte film (SEI) on the surface and/or inside of the anode active material was suppressed by the coating with the composite, thereby suppressing the internal resistance of the lithium battery.

The lithium batteries of Examples 9 to 12 had improved lifespan characteristics by using the composite-coated composite anode active material.

In the case of the lithium battery of Example 13, lifespan characteristics were further improved by using a composite anode active material additionally including carbon nanotubes in addition to the composite.

The lithium battery of Example 14 had relatively poor lifespan characteristics compared to the lithium batteries of Examples 9 to 13 because the thickness of the coating layer was increased by using alumina having a particle diameter of 200 nm.

The lithium battery of Comparative Example 7 included a composite anode active material in which a simple mixture of alumina and graphene was coated on a core, and a uniform coating was not obtained on the core due to aggregation of graphene.

In the lithium battery of Comparative Example 8, due to the use of the composite and the silicon composite structure as an anode active material, a coating layer was not formed on the silicon composite structure.

Although not shown in the table, the lithium battery of Example 17 has improved lifespan characteristics compared to the lithium battery of Comparative Example 11.

Evaluation Example 6: Room temperature high rate charging characteristic evaluation

Each of the lithium batteries manufactured in Examples 9 to 16 and Comparative Examples 6 to 10 was charged with a constant current of 0.1 C rate at 25 °C until a voltage reached 4.5 V (vs. Li), and was then cut-off at a current of 0.02 C rate while maintaining the voltage at 4.5 V in a constant voltage mode. Subsequently, each of the lithium batteries was discharged at a constant current of 0.2 C rate until the voltage reached 2.75 V (vs. Li) (formation cycle).

Each of the lithium batteries having undergone the formation cycle was charged with a constant current of 0.2 C rate at 25 °C until a voltage reached 4.5 V (vs. Li), and was then cut-off at a current of 0.02 C rate while maintaining the voltage at 4.5 V in a constant voltage mode. Subsequently, each of the lithium batteries was discharged at a constant current of 0.2 C rate until the voltage reached 2.75 V (vs. Li) (1st cycle).

Each of the lithium batteries having undergone the 1st cycle was charged with a constant current of 0.5 C rate at 25 °C until a voltage reached 4.5 V (vs. Li), and was then cut-off at a current of 0.02 C rate while maintaining the voltage at 4.5 V in a constant voltage mode. Subsequently, each of the lithium batteries was discharged at a constant current of 0.2 C rate until the voltage reached 2.8 V (vs. Li) (2nd cycle).

Each of the lithium batteries having undergone the 2nd cycle was charged with a constant current of 1.0 C rate at 25 °C until a voltage reached 4.5 V (vs. Li), and was then cut-off at a current of 0.02 C rate while maintaining the voltage at 4.5 V in a constant voltage mode. Subsequently, each of the lithium batteries was discharged at a constant current of 0.2 C rate until the voltage reached 2.8 V (vs. Li) (3rd cycle).

Each of the lithium batteries having undergone the 3rd cycle was charged with a constant current of 2.0 C rate at 25 °C until a voltage reached 4.5 V (vs. Li), and was then cut-off at a current of 0.02 C rate while maintaining the voltage at 4.5 V in a constant voltage mode. Subsequently, each of the lithium batteries was discharged at a constant current of 0.2 C rate until the voltage reached 2.8 V (vs. Li) (4th cycle).

Each of the lithium batteries having undergone the 4th cycle was charged with a constant current of 3.0 C rate at 25 °C until a voltage reached 4.5 V (vs. Li), and was then cut-off at a current of 0.02 C rate while maintaining the voltage at 4.5 V in a constant voltage mode. Subsequently, each of the lithium batteries was discharged at a constant current of 0.2 C rate until the voltage reached 2.8 V (vs. Li) (5th cycle).

In all charge/discharge cycles, a 10-minute stop time was provided after every charge/discharge cycle. Some of the results of the high-rate charging characteristics experiments at room temperature are shown in Table 4. The high rate characteristics are defined by Equation 3 below.

<Equation 3>

High rate characteristics [%] = [3.0 C rate charging capacity (5th cycle charging capacity) / 0.1 C rate charging capacity (Formation cycle charging capacity)] × 100

[Table 4]

|  | High-rate characteristic [%] |
|---|---|
| Comparative Example 6: Bare silicon composite structure (no coating) | 51.2 |
| Example 9: $Al_2O_3$@Gr 1 wt% coating/silicon composite structure core | 54.1 |
| Comparative Example 10: Bare $SiO_x$ (no coating) | 51.4 |
| Example 16: $Al_2O_3$@Gr 1 wt% coating/$SiO_x$ core | 54.7 |

As shown in Table 4, the lithium batteries of Examples 9 and 16 coated with the composite of Preparation Example 1 had improved high-rate characteristics compared to the lithium batteries of Comparative Examples 1 and 10 in which a coating layer was not formed.

Evaluation Example 7: Evaluation of the expansion rate of the anode at high temperature (55 °C)

Each of the lithium batteries manufactured in Examples 9 to 16 and Comparative Examples 6 to 10 was charged with a constant current of 0.1 C rate at 25 °C until a voltage reached 4.4 V (vs. Li), and was then cut-off at a current of 0.05 C rate while maintaining the voltage at 4.4 V in a constant voltage mode. Subsequently, each of the lithium batteries was discharged at a constant current of 0.1 C rate until the voltage reached 2.8 V (vs. Li) (formation cycle).

The lithium battery that had undergone the formation cycle was charged with a constant current at 25 °C at a rate of 0.7 C until the voltage reached 4.5 V (vs. Li), and then was cut-off.

Then, while the charged lithium battery was subjected to floating charging at a constant voltage of 4.5 V (vs. Li), the expansion ratio of an anode at 55 °C after 7 days, 10 days, 14 days, 17 days, and 20 days has elapsed, was measured. Results thereof are shown in Table 5. The expansion ratio of the anode is represented by Equation 4.

<Equation 4>

Thickness expansion ratio (%) = [(thickness of anode after storage for 20 days - thickness of anode before assembly) / thickness of anode before assembly] × 100

"Thickness of the anode before assembly" refers to the thickness of the anode measured before assembly of the lithium battery.

"Thickness of the anode after storage for 20 days" refers to the thickness of the anode measured after disassembling the lithium battery taken out after storage for 20 days in the oven.

Table 5

| | Anode expansion ratio [%] |
| --- | --- |
| Comparative Example 6: bare silicon composite structure (no coating) | 12.2 |
| Example 9: $Al_2O_3$@Gr 1 wt% coating/silicon composite structure core | 9.3 |
| Comparative Example 10: Bare $SiO_x$ (no coating) | 7.6 |
| Example 16: $Al_2O_3$@Gr 1 wt% coating/$SiO_x$ core | 4.1 |

As shown in Table 5, the expansion ratio of the anode of the lithium battery of Example 9 was significantly smaller than the expansion ratio of the anode of the lithium battery of Comparative Example 6.

The expansion ratio of the anode of the lithium battery of Example 16 was significantly smaller than the expansion ratio of the anode of the lithium battery of Comparative Example 10.

It was determined that the decrease in the expansion ratio was due to the suppression of the formation of a thick solid electrolyte film (SEI) caused by the substantial decrease in the side reaction between the anode active material and the electrolyte by the composite coating.

According to one aspect, since the composite anode active material includes a shell including the first metal oxide and the first carbonaceous material, cyclic characteristics of a lithium battery are improved and a change in volume thereof is suppressed.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the disclosure as defined by the following claims.

**Claims**

1. A composite anode active material comprising:

   a core; and
   a shell disposed on and conformed to a surface of the core,
   wherein the core includes a silicon-containing structure, a silicon-containing compound, or a combination thereof,
   the shell includes at least one first metal oxide represented by Formula $M_aO_b$ ($0<a\leq3$, $0<b<4$, and when a is 1, 2, or 3, b is not an integer), and a first carbonaceous material, and
   the at least one first metal oxide is disposed in a matrix of the first carbonaceous material, and M is at least one metal selected from Groups 2 to 13, 15 and 16 of the Periodic Table of the Elements.

2. The composite anode active material of claim 1, wherein
   the silicon-containing structure includes a silicon composite structure, and the silicon-containing compound includes $SiO_x$ ($0<x<2$).

3. The composite anode active material of claim 2, wherein
   the silicon composite structure includes

   a porous silicon secondary particle and a first carbon flake located on the porous silicon secondary particle, wherein
   the porous silicon secondary particle is an aggregate of a plurality of silicon composite primary particles, and each of the silicon composite primary particles includes silicon, silicon suboxide ($SiO_x$, $0<x<2$) located on the silicon, and a second carbon flake located on the silicon suboxide.

4. The composite anode active material of claim 2 or claim 3, wherein
   a porosity of the silicon composite structure is 60% or less or is non-porous, and the silicon composite structure has a non-spherical shape.

5. The composite anode active material of claim 3 or claim 4, wherein

   the first carbon flake and the second carbon flake are same flakes, and
   the first carbon flake and the second carbon flake are each independently graphene, graphite, carbon fiber, graphitic carbon, graphene oxide, or a mixture thereof.

6. The composite anode active material of any one of claims 2 to 5, wherein

   the silicon-containing structure further comprises a carbonaceous coating layer located on the silicon composite structure, the carbonaceous coating layer comprising a first amorphous carbon,
   the silicon-containing structure further comprises a second amorphous carbon located in the silicon composite structure, the silicon composite structure comprises a porous silicon secondary particle, and the second amorphous carbon is located in pores of the porous silicon secondary particle, and
   the first amorphous carbon and the second amorphous carbon each independently include pitch carbon, soft carbon, hard carbon, mesophase pitch carbide, calcined coke, carbon fiber, or a mixture thereof.

7. The composite anode active material of any one of claims 1 to 6, wherein:

   (i) the at least one first metal oxide includes a first metal, and the first metal includes at least one selected from Al, Nb, Mg, Sc, Ti, Zr, V, W, Mn, Fe, Co, Pd, Cu, Ag, Zn, Sb, and Se; and/or
   (ii) the at least one first metal oxide comprises at least one selected from $Al_2O_z$ ($0<z<3$), $NbO_x$ ($0<x<2.5$), $MgO_x$ ($0<x<1$), $Sc_2O_z$ ($0<z<3$), $TiO_y$ ($0<y<2$), $ZrO_y$ ($0<y<2$), $V_2O_z$ ($0<z<3$), $WOy$ ($0<y<2$), $MnOy$ ($0<y<2$), $Fe_2O_z$ ($0<z<3$), $Co_3O_w$ ($0<w<4$), $PdO_x$ ($0<x<1$), $CuO_x$ ($0<x<1$), $AgO_x$ ($0<x<1$), $ZnO_x$ ($0<x<1$), $Sb_2O_z$ ($0<z<3$), and $SeO_y$ ($0<y<2$).

8. The composite anode active material of any one of claims 1 to 7, wherein the shell further includes a second metal oxide represented by $M_aO_c$ ($0<a\leq3$, $0<c\leq4$, and when a is 1, 2, or 3, c is an integer),

   the second metal oxide includes a same metal as the at least one first metal oxide, and
   c/a, which is a ratio of a and c of the second metal oxide, has a greater value than b/a, which is a ratio of a and b of the at least one first metal oxide.

9. The composite anode active material of claim 8, wherein:

   (i) the second metal oxide is selected from $Al_2O_3$, NbO, $NbO_2$, $Nb_2O_5$, MgO, $Sc_2O_3$, $TiO_2$, $ZrO_2$, $V_2O_3$, $WO_2$, $MnO_2$, $Fe_2O_3$, $Co_3O_4$, PdO, CuO, AgO, ZnO, $Sb_2O_3$, and $SeO_2$, and
   the first metal oxide is a reduction product of the second metal oxide; and/or
   (ii) a particle diameter of at least one selected from the first metal oxide and the second metal oxide is about 1 nm to about 100 nm.

10. The composite anode active material of any one of claims 1 to 9, wherein the shell protrudes from a surface of at least one of the first metal oxide and the second metal oxide, and
    a thickness of the shell is about 1 nm to about 5 $\mu$m.

11. The composite anode active material of any one of claims 1 to 10, wherein the shell includes at least one selected from a composite including the first metal oxide and a first carbonaceous material and a result of milling the composite, and
    an amount of the at least one selected from a composite including the first metal oxide and a first carbonaceous material and a result of milling the composite is about 0.1 wt% to about 5 wt% of the total weight of the composite anode active material.

12. The composite anode active material of claim 11, wherein:

    (i) the first carbonaceous material has a branched structure, and the first metal oxide is distributed in the branched structure, and

the branched structure includes a plurality of first carbonaceous material particles in contact with each other; or
(ii) the first carbonaceous material has at least one structure selected from a spherical structure, a spiral structure in which spherical structures are connected to each other, and a cluster structure in which spherical structures are aggregated with each other,

the first metal oxide is distributed in the spherical structure, the spherical structure has a size of about 50 nm to about 300 nm, the spiral structure has a size of about 500 nm to about 100 mm, and the cluster structure has a size of about 0.5 mm to about 10 cm,

the composite is a crumpled faceted-ball structure or a planar structure, and at least one selected from the first metal oxide and the second metal oxide is distributed inside the crumpled faceted-ball structure and the planar structure or on a surface of the crumpled faceted-ball structure and the planar structure, and the first carbonaceous material extends from the first metal oxide by a distance of 10 nm or less, and includes at least 1 to 20 first carbonaceous material layers, and a total thickness of the first carbonaceous material is about 0.6 nm to about 12 nm.

13. The composite anode active material of any one of claims 1 to 12, wherein:

(i) the shell further includes a second carbonaceous material, the second carbonaceous material includes fibrous carbon, and the second carbonaceous material includes at least one selected from carbon nanofibers and carbon nanotubes,

a length of the second carbonaceous material is 500 nm or less, and a diameter of the second carbonaceous material is 50 nm or less, and
an amount of the second carbonaceous material is about 0.001 wt% to about 1 wt% of the total weight of the composite anode active material; and/or

(ii) a specific surface area of the composite anode active material is about 1 $m^2$/g to about 50 $m^2$/g, and
the composite anode active material has an average particle diameter (D50) of about 1 $\mu$m to about 30 $\mu$m, D10 is about 0.1 $\mu$m to about 10 $\mu$m, and D90 is about 10 $\mu$m to about 50 $\mu$m.

14. An anode comprising the composite anode active material according to any one of claims 1 to 13.

15. An anode comprising: a dry composite anode active material, a dry conductive material, and a dry binder, wherein the dry composite anode active material includes:

a core; and
a shell located on and conformed to a surface of the core, wherein
the core includes a silicon-containing structure, a silicon-containing compound, or a combination thereof,
the shell includes at least one first metal oxide represented by Formula $M_aO_b$ (0<a≤3, 0<b<4, and when a is 1, 2, or 3, b is not an integer), and a first carbonaceous material, and
the at least one first metal oxide is located in a matrix of the first carbonaceous material, and M is at least one metal selected from Groups 2 to 13, 15 and 16 of the Periodic Table of the Elements.

16. A lithium battery comprising: a cathode; the anode of claim 15; and
an electrolyte disposed between the cathode and the anode.

# FIG. 1

## FIG. 2A

## FIG. 2B

# FIG. 2C

SiO$_x$

Si metal

Si2p

SCN bare
SCN GB

110    108    106    104    102    100    98    96

# FIG. 2D

Al–O

Al2p

SCN bare
SCN GB

81    79    77    75    73    71    69

# FIG. 3A

# FIG. 3B

# FIG. 3C

# FIG. 3D

FIG. 4A

FIG. 4B

FIG. 4C

FIG. 4D

FIG. 5

# FIG. 6

# FIG. 7

# FIG. 8

Europäisches
Patentamt

European
Patent Office

Office européen
des brevets

# EUROPEAN SEARCH REPORT

Application Number

EP 22 20 9664

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 109 817 949 A (UNIV TSINGHUA) 28 May 2019 (2019-05-28) * paragraph [0001] - paragraph [0088]; claim 1 * | 1,2,7-9, 14-16 | INV. H01M4/04 H01M4/1393 H01M4/1395 H01M4/36 |
| T | RICHARD HOGG: "Issues in Particle Size Analysis", KONA POWDER AND PARTICLE JOURNAL, vol. 26, 1 January 2008 (2008-01-01), pages 81-93, XP093004777, JP ISSN: 0288-4534, DOI: 10.14356/kona.2008009 * the whole document * | 9,10,12, 13 | H01M4/38 H01M4/48 H01M4/587 H01M4/62 |
| T | Espinal Laura: "POROSITY AND ITS MEASUREMENT" In: "Characterization of Materials, Second Edition", 12 October 2012 (2012-10-12), Wiley, XP055832126, pages 1-9, Retrieved from the Internet: URL:https://doi.org/10.1002/0471266965.com 129> * the whole document * | 4 | |
| A | US 2018/145316 A1 (MOON JONGSEOK [KR] ET AL) 24 May 2018 (2018-05-24) * the whole document * | 1-16 | |
| A | KR 2015 0098453 A (LG CHEMICAL LTD [KR]) 28 August 2015 (2015-08-28) * the whole document * | 1-16 | |

TECHNICAL FIELDS SEARCHED (IPC)

H01M

The present search report has been drawn up for all claims

| Place of search | Date of completion of the search | Examiner |
|---|---|---|
| Munich | 15 March 2023 | Radeck, Stephanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 20 9664

This annex lists the patent family members relating to the patent documents cited in the above-mentioned European search report.
The members are as contained in the European Patent Office EDP file on
The European Patent Office is in no way liable for these particulars which are merely given for the purpose of information.

15-03-2023

| Patent document cited in search report | | Publication date | Patent family member(s) | | Publication date |
|---|---|---|---|---|---|
| CN 109817949 | A | 28-05-2019 | NONE | | |
| US 2018145316 | A1 | 24-05-2018 | CN | 108075117 A | 25-05-2018 |
| | | | EP | 3324419 A1 | 23-05-2018 |
| | | | KR | 20220088648 A | 28-06-2022 |
| | | | US | 2018145316 A1 | 24-05-2018 |
| | | | US | 2021202938 A1 | 01-07-2021 |
| KR 20150098453 | A | 28-08-2015 | NONE | | |

EPO FORM P0459

For more details about this annex : see Official Journal of the European Patent Office, No. 12/82